(19) Europäisches Patentamt
European Patent Office
Office européen des brevets

(11) **EP 4 268 003 B1**

(12) **EUROPEAN PATENT SPECIFICATION**

(45) Date of publication and mention
of the grant of the patent:
**23.04.2025 Bulletin 2025/17**

(21) Application number: **21843709.3**

(22) Date of filing: **21.12.2021**

(51) International Patent Classification (IPC):
*G02B 21/00* (2006.01)  *G01N 21/64* (2006.01)
*G02B 27/09* (2006.01)  *G02B 27/58* (2006.01)

(52) Cooperative Patent Classification (CPC):
**G02B 21/0032; G02B 21/0076; G02B 21/0084;
G02B 27/0927; G02B 27/58;** G01N 21/6458

(86) International application number:
**PCT/EP2021/087000**

(87) International publication number:
**WO 2022/136375 (30.06.2022 Gazette 2022/26)**

(54) **LIGHT MICROSCOPY METHOD AND LIGHT MICROSCOPY DEVICE**

LICHTMIKROSKOPIEVERFAHREN UND LICHTMIKROSKOPIEVORRICHTUNG

PROCÉDÉ ET DISPOSITIF DE MICROSCOPIE PHOTONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2020 EP 20216708**

(43) Date of publication of application:
**01.11.2023 Bulletin 2023/44**

(73) Proprietor: **Abberior Instruments GmbH
37077 Göttingen (DE)**

(72) Inventors:
• **SCHÖNLE, Andreas**
 **37085 Göttingen (DE)**
• **KASTRUP, Lars**
 **37073 Göttingen (DE)**

(56) References cited:
 **EP-A1- 3 686 643**

• **YE MA ET AL: "Fight against background noise
in stimulated emission depletion nanoscopy",**
PHYSICAL BIOLOGY, INSTITUTE OF PHYSICS
PUBLISHING, BRISTOL, GB, vol. 16, no. 5, 5 July
2019 (2019-07-05), pages 51002, XP020342809,
ISSN: 1478-3975, DOI: 10.1088/1478-3975/
AB255C
• **GAO PENG ET AL: "Precise background
subtraction in stimulated emission double
depletion nanoscopy",** OPTICS LETTERS, vol.
42, no. 4, 15 February 2017 (2017-02-15), US,
pages 831, XP055813521, ISSN: 0146-9592, DOI:
10.1364/OL.42.000831
• **MÖHL ANNA ET AL: "Improving quantitative
fluorescence imaging with flat field illumination",**
PROGRESS IN BIOMEDICAL OPTICS AND
IMAGING, SPIE - INTERNATIONAL SOCIETY FOR
OPTICAL ENGINEERING, BELLINGHAM, WA, US,
vol. 10881, 4 March 2019 (2019-03-04), pages
1088103 - 1088103, XP060117527, ISSN:
1605-7422, ISBN: 978-1-5106-0027-0, DOI:
10.1117/12.2507491

## Description

## Technical background of the invention

The invention relates to a light microscopy method, particularly a scanning fluorescence microscopy method, and a light microscopy device, particularly for performing the method according to the invention. The method involves exciting fluorophores in a sample by illuminating the sample with excitation light and illuminating a partial area of the sample with impeding light to impede fluorescence around a local minimum to improve the resolution of microscopic imaging beyond the diffraction limit.

In recent years, super resolution microscopy methods such as Stimulated Emission Depletion (STED) microscopy, Reversible Saturable Optical Fluorescence Transitions (RESOLFT) microscopy and Ground State Depletion (GSD) microscopy have revolutionized the field of fluorescence microscopic imaging by improving resolution way beyond the diffraction limit.

For example, in STED microscopy, fluorescent dye molecules in the sample are excited by an excitation light beam, and an impeding or depletion light beam having a local minimum is overlaid with the excitation light beam. The first impeding light beam impedes fluorescence by disrupting the excited state of the fluorophores by stimulated emission except in a small area around the local minimum. This results in a fluorescence signal which in theory stems only from the local minimum, thereby leading to an improved effective resolution. By generating impeding light beams with a very small local minimum and a steep intensity increase around the minimum, effective resolutions on the order of 10 nm or less have been achieved.

By scanning the excitation beam and the first impeding light beam over the sample and detecting fluorescence light in a confocal plane, images with extremely high resolution can be obtained.

However, the signal-to-noise ratio, and thus the image quality in STED microscopy is strongly affected by background fluorescence. A first source of background signal is direct excitation of fluorophores by the STED beam which may occur at the high light intensities required for stimulated emission depletion. In addition, the STED beam may not completely deplete the fluorescence excited by the excitation light in certain fluorescent dye molecules or other molecules in the sample due to different mechanisms, resulting in background fluorescence.

The problem of background fluorescence is even exacerbated when two incoherent STED beams are combined to deplete fluorescence both around a central spot in the focal plane (x-y plane) and above and below the focal plane along the optical axis (z-direction). Firstly, the total light intensity is even higher than in case of only one STED beam, leading to increased direct excitation. Secondly, residual STED intensity at the minimum is often observed due to the combination of the two STED beams, which reduces the signal of interest and therefore leads to a lower signal-to-noise ratio.

## Prior art

The background problem in STED microcopy has been addressed by several methods of the prior art.

According to sub-STED, an image of the sample illuminated only by the STED beam, but not by the excitation beam, is recorded and subsequently subtracted from the regular STED image (Hanne J, Falk, HJ, Görlitz F, Hoyer P, Engelhardt J, Sahl SJ, Hell SW; STED Nanoscopy with Fluorescent Quantum Dots. Nat. Comm. 2015 6 (May), 7127; Vicidomini G, Moneron G, Eggeling C, Rittweger E, Hell SW; STED with Wavelengths Closer to the Emission Maximum. Opt. Express 2012, 20 (5), 5225).

In a method termed stimulated emission double depletion (STEDD), a second STED beam without the local minimum (e.g., having a Gaussian shape) is provided to reduce background fluorescence from incomplete depletion (Gao P, Prunsche B, Zhou L, Nienhaus K, Nienhaus GU; Background Subtraction in Stimulated Emission Double Depletion Nanoscopy. Opt. Lett. 2017, 42 (4), 831, Gao P, Prunsche B, Zhou L, Nienhaus K, Nienhaus GU. Background Suppression in Fluorescence Nanoscopy with Stimulated Emission Double Depletion. Nat. Photonics 2017, 11 (3), 167-169).

Another strategy described in the prior art involves gating the fluorescence detection time to reduce background fluorescence, wherein early photons which suffer from incomplete depletion are selectively rejected (Vicidomini G, Moneron G, Han KY, Westphal V, Ta H, Reuss M, Engelhardt J, Eggeling C, Hell SW. Sharper Low-Power STED Nanoscopy by Time Gating. Nat. Methods 2011, 8 (7), 571-573).

International patent application publication WO 2020/198487 A1 discloses a method, by which background fluorescence both from direct excitation and from incomplete depletion in 3D-STED microscopy is reduced. The intensity distribution used to obtain a local intensity minimum in the focal plane has a donut shape, which is generated by passing a linearly polarized part of the depletion light beam through a vortex-shaped phase plate, and circularly polarizing the patterned light beam by a quarter wave plate at the rear aperture of the objective, such that the central minimum of the donut shaped distribution is formed by destructive interference. To obtain a background image, the donut shape is then periodically disrupted by rotating the quarter wave plate by $\pi/4$ to switch from left circular polarization to right circular polarization. Combined with the phase pattern from the vortex phase plate, this results in a disrupted intensity distribution in the focal plane. In this altered intensity distribution, among many other effects, there is incomplete destructive interference in the central region, which results in additional depletion light at the center. An image obtained with this altered STED beam is then subtracted from the regular STED image to reduce background fluorescence.

The article "Precise background subtraction in stimulated emission double depletion nanoscopy" by P. Gao and G.U. Nienhaus, Optics Letters 42(4), p. 831-834, February 15, 2017, describes a technique is which a sample is illuminated by two STED light pulses resulting in different spatial distributions at the focus: The initial pulse yields a donut-shaped distribution, and the delayed pulse gives rise to a Gaussian-shaped distribution. The detection signal is split by time-binning into a signal of interest and a reference signal representing background fluorescence, and the obtained STED-images can be background-corrected by subtracting the weighted reference signal from the signal of interest.

The same method is reviewed in the article "Fight against background noise in stimulated emission depletion nanoscopy" by Y. Ma and T. Ha, Physical Biology 16 (2019), 051002.

Since binning of the photon histogram is used in the above-described method, background correction becomes inaccurate when long delays are set between the two STED pulses, because the fluorescence induced by the initial excitation pulse has already significantly decayed at the time of the second STED pulse. Conversely, a shorter delay between the STED pulses decreases the desired signal of interest, reducing the signal-to-noise ratio.

Patent application EP 3 686 643 A1 describes a STED-microscope adapted to split a light pulse into an excitation pulse resulting in a local intensity maximum at the focus and a STED pulse resulting in a local intensity minimum at the focus with defined time delay and phase difference. An auxiliary excitation pulse with a Gaussian or flat-top profile can be generated to suppress background signals, which may be due to one-color two-photon excitation of the fluorophore.

The above-described methods serve to provide additional depletion light at the intensity minimum, but also result in significant changes in the shape of the intensity distribution around the minimum. Since two signals resulting from differently shaped intensity distributions of the depletion light are subtracted from each other, background correction is not optimal and may introduce artefacts to the corrected signal.

The article "Improving quantitative fluorescence imaging with flat field illumination" by A. Möhl, I. Khaw, B. Croop, J. Tang, U. Fuchs and K.Y. Han (2019, Proc. of SPIE Vol. 10881, 1088103-1 to 1088103-9) describes a method for generating a flat-top profile from a Gaussian laser beam to improve quantitative analysis of widefield fluorescence images.

## Problem

Hence, the problem underlying the present invention is to provide a method for background correction of a signal from a fluorescence microscope with a resolution lower than the diffraction limit with an improved accuracy.

## Description of the invention

This objective is attained by the subject matter of the independent claims 1 and 12. Embodiments of the invention are specified in sub claims 2 to 11 and 13 to 15 and are described hereafter.

A first aspect of the invention relates to a light microscopy method comprising illuminating a sample comprising fluorescent dye molecules by an excitation light beam comprising excitation light capable of exciting the fluorescent dye molecules, illuminating the sample by a first impeding light beam comprising impeding light capable of impeding the fluorescence of the fluorescent dye molecules, generating an intensity distribution of the impeding light with at least one local minimum, providing additional impeding light in an area overlapping with the local minimum, obtaining a first fluorescence signal from the area overlapping with the local minimum in the absence of the additional impeding light, and obtaining a second fluorescence signal from the area overlapping with the local minimum in the presence of the additional impeding light, and correcting the first fluorescence signal by the second fluorescence signal.

The excitation light is capable of exciting the fluorescent dye molecules, in other words the excitation light comprises light of a wavelength capable of transferring electrons of the fluorescent dye molecules from a ground state to an excited state, which decays to the ground state upon emitting fluorescence light.

In particular, the sample is illuminated by the excitation light by passing the excitation light beam from a light source, e.g., a laser, through an objective onto the sample, more particularly such that a focal plane of the objective coincides with a location within or at a surface of the sample. Likewise, the sample is particularly illuminated by the impeding light by passing the first impeding light beam from a light source, e.g., through an objective onto the sample, more particularly such that a focal plane of the objective coincides with a location of within or at a surface of the sample. The same objective may be used to illuminate the sample with the excitation light and the impeding light.

In particular, to impede the fluorescence of the fluorescent dye molecules, stimulated emission depletion (STED) of the fluorescent dye molecules is induced. According to this variant of the invention, the impeding light comprises a wavelength capable to inducing stimulated emission of the fluorescent dye molecules, in other words causing a transition of electrons of the fluorescent dye molecule from the excited state to a vibrational energy level above the ground state, thereby preventing fluorescence emission. The associated microscopy method is termed STED microscopy. Alternatively, the impeding light may impede the fluorescence of the fluorescent dye molecules by other mechanisms: e.g., the fluorescent dye molecules are selectively switched off by the impeding light, such as known from the method termed Reversible Saturable Optical Fluorescence Transitions (RESOLFT) fluorescence microscopy. Yet, alternatively, the impeding light may be applied to transfer the fluorescent dye molecules from their ground state to a dark state, in which the fluorophores are not capable of being excited by the excitation light. The associated microscopy method is known as Ground State Depletion (GSD) fluorescence microscopy.

The term "intensity distribution" particularly describes a spatial distribution of the light intensity in and around the focal plane of an objective through which the sample is illuminated by the excitation light and/or impeding light, such as described by a point spread function (PSF).

Preferably, the light intensity of the intensity distribution at the local minimum is as small as possible (particularly close to zero) to ensure that as little impeding light as possible is present at the local minimum when the first fluorescence signal is obtained. Furthermore, the light intensity preferably increases as steeply as possible with increasing distance from the local minimum (particularly both in the focal plane, i.e., in the x-y plane, and perpendicular to the focal plane, i.e., in the z-direction). This allows to obtain the first fluorescence signal from a spot which is as small as possible, whereas the fluorescence around the local minimum is preferably completely impeded by the impeding light, increasing the resolution of fluorescence microscopic imaging beyond the diffraction limit.

The intensity distribution comprises at least one local minimum, i.e., either a single minimum, such as, e.g., for a donut shaped PSF which is commonly applied in STED microscopy, or a plurality of local minima separated by local maxima, e.g., in case of a standing intensity wave in the focal plane. Therein, the term "local minimum" is to be understood in the sense of a point having the lowest light intensity in its vicinity, whereas other minima with the same or lower intensity may exist at other points in the intensity distribution.

In case of an intensity distribution with a single minimum, this minimum can be regarded both as a local minimum and as a global minimum (i.e., the point or points in space having the lowest intensity of the entire intensity distribution).

For example, the local minimum may correspond to a spot in the focal plane or to a line, particularly extending in the focal plane (i.e., in a direction parallel to the focal plane).

In particular, in case the intensity distribution has a single local minimum, the local minimum may be positioned at a center of the intensity distribution. In this case, the intensity distribution (and the underlying point spread function describing the intensity distribution) is symmetric in the focal plane (i.e., in the x-y-plane, such as a donut shape) and/or symmetric perpendicular to the focal plane (i.e., in the z-direction, such as a bottle beam).

An intensity distribution in or around the focal plane with at least one local minimum can be generated, e.g., by imposing certain phase patterns or amplitude patterns onto the first impeding light beam at the location of the back aperture (exit pupil) of the objective. This may be achieved, e.g., by placing a transmissive or reflective wave front modulator at a location in the beam path of the first impeding light beam which is conjugated to the back aperture of the objective (so-called pupil plane), or near such a location. E.g., an active area of such a wave front modulator may be placed at a pupil plane or at an angle to the pupil plane. Alternatively, the active area of the wave front modulator may be placed near such a location, wherein the wave front imposed on the first impeding light beam by the wave front modulator is adjusted to correct for the location mismatch, thereby ensuring that the desired amplitude or phase pattern is obtained at the location of the back aperture.

Examples of suitable wave front modulators resulting in a phase pattern in the first impeding light beam are structured phase plates and phase modulating spatial light modulators, on an active area of which a phase pattern may be generated by an arrangement of phase retarding liquid crystals.

For example, to generate a donut-shaped intensity distribution at and around the focal plane, a vortex shaped phase pattern increasing from zero to $2\pi$ in a circumferential direction with respect to the optical axis of the objective can be imposed on the first impeding light beam at the back aperture (by placing an active surface of the wavefront modulator at or near a pupil plane), and the first impeding light beam can be subsequently circularly polarized (e.g., by an appropriately oriented quarter wave plate). This leads to destructive interference in a small central area of the focus, hence generating the donut shape. The described vortex-shaped phase pattern can be generated by appropriately patterned fixed phase plates or by phase-modulating spatial light modulators, for example.

In a similar manner, a bottle-beam shaped intensity distribution may be obtained by generating a phase pattern characterized by a phase jump of $\pi$ between two concentrically oriented areas (i.e., a central circle and a ring around the circle) at the location of the back aperture. A bottle beam is an intensity distribution with a minimum at the focal plane and a relatively steep intensity increase in the z-direction, perpendicular to the focal plane.

In some 3D-STED microscopy methods known from the prior art, a donut shaped intensity distribution is overlaid with a bottle beam shaped intensity distribution, wherein the two different distributions are obtained by two incoherent light beams, such that they do not interfere at the focal plane. Thereby, a three-dimensional intensity distribution with a local minimum with steeply increasing intensity both in the focal plane (x-y plane) and along the optical axis (z-direction) is obtained, which is advantageous for three-dimensional imaging of fluorescently labeled samples.

Another type of intensity distribution which is in the simplest form characterized by a line-shaped minimum extending in the focal plane can be generated by modulating linearly polarized light by a phase modulating element having a phase jump of π along a line oriented perpendicular to the polarization direction of the light.

An amplitude pattern can be imposed on the first impeding light beam, e.g., by an array of tiltable micromirrors. The micromirrors can be individually switched between a first orientation configured to reflect incoming light into the beam path and a second orientation reflecting light outside of the beam path resulting in a decreased amplitude.

According to the invention, additional impeding light is provided in an area overlapping with the local minimum. Therein, the term "additional" relates to the position in space at or near the local minimum, but not necessarily to the remaining intensity distribution. That is, the "additional impeding light" may or may not result in reduced impeding light further away from the local minimum. For example, the additional impeding light may be generated by altering the phase or amplitude pattern used to generate the intensity distribution of the impeding light. In this case the total power of the impeding light remains constant, but the intensity distribution changes, at least slightly. In this situation, the additional impeding light would be additional in respect of a small area around the local minimum, but not additional relative to the total intensity of the impeding light. Alternatively, the additional impeding light may be generated, e.g., by a second impeding light beam from a dedicated light source separate from the light source used to generate the impeding light during obtaining the first fluorescence signal. In this case, the "additional impeding light" is additional both in respect of the intensity in the area around the local minimum and the total intensity of the impeding light.

The additional impeding light is generated to selectively impede the fluorescence signal from the small area of the local minimum, which is the area of interest used for high resolution image acquisition. This results in a second fluorescence signal which ideally consists only of (normally unwanted) background fluorescence. Using this second fluorescence signal, the first fluorescence signal may be background corrected resulting in increased contrast of the microscopic image.

Providing the additional impeding light in an area overlapping with the local minimum, particularly means providing the additional impeding light at the local minimum and in an area around the local minimum. More particularly the additional impeding light is provided at the local minimum at the center of the intensity distribution of the impeding light.

At each point of the intensity distribution at which the impeding light has a light intensity greater than a saturation intensity of the impeding light, the light intensity of the impeding light differs by 20 % or less, particularly 10 % or less, more particularly 5 % or less, even more particularly 2,5 % or less, between the intensity distribution in the presence of the additional impeding light and the intensity distribution in the absence of the additional impeding light. The intensity distribution of the impeding light comprises the local minimum both in the presence of the additional impeding light and in the absence of the additional impeding light.

Therein, the term "saturation intensity" (abbreviated $I_{sat}$) designates the light intensity of the impeding light, at which 50 % of the fluorescent dye molecules are impeded from emitting fluorescence. In case the impeding light impedes fluorescence of the fluorescent dye molecules by stimulated emission depletion (STED), the saturation intensity refers to the light intensity of the impeding light at which 50 % of the fluorescent dye molecules are transferred from the excited state to the vibrational energy state above the ground state by stimulated emission depletion. It can be shown that in STED microscopy, when the intensity of the impeding light is equal to $I_{sat}$, the resolution is improved by a factor of $\sqrt{2}$ compared to confocal microscopy.

In the intensity distribution of the impeding light, the intensity preferably increases steeply with increasing distance from the local minimum (particularly from the center of the intensity distribution). Thus, the positions in the intensity distribution where the intensity is equal to $I_{sat}$ are relatively close to the local minimum. According to the definition stated above, the intensity distribution changes only by a small amount radially outside from these positions when the additional depletion light is provided at the local minimum.

This ensures that the shape of the intensity distribution is minimally affected (except at the local minimum and at a small distance from the local minimum) by the additional depletion light, and therefore improves the accuracy of background correction. In contrast, disrupting the total intensity distribution by the methods known from the prior art results in additional light intensity at the minimum, but severely affects the overall shape of the intensity distribution, resulting in artefacts when the two resulting signals are subtracted during background correction.

In certain embodiments, correcting the first fluorescence signal by the second fluorescence signal comprises subtracting a background signal derived from the second fluorescence signal from the first fluorescence signal. The background signal may be identical to the second fluorescence signal or may be derived from the second fluorescence signal by a mathematical operation, e.g., a scaling or weighting operation. In particular, the background signal may be based on or equal to the second fluorescence signal multiplied by a correction factor, more particularly a correction factor depending on measurement parameters.

In certain embodiments, the first fluorescence signal and the second fluorescence signal are obtained by illuminating the sample by excitation light beams of different powers.

In certain embodiments, the first fluorescence signal and the second fluorescence signal are obtained using different pixel dwell times. Therein, the term "pixel dwell time" describes the accumulation time of the detector which determines the pixel size in combination with the scanning speed of the sample.

In particular, obtaining the second fluorescence signal at lower power of the excitation light or smaller pixel dwell time compared to the first fluorescence signal may be acceptable for background correction due to the lower spatial frequency content of a background image. If this is the case, reducing the power and/or pixel dwell time will advantageously result in a reduction of photodamage, particularly photobleaching or phototoxicity, to the sample.

In certain embodiments, deriving the background signal from the second fluorescence signal comprises a denoising operation and/or a smoothing operation. In this manner, the neighboring pixels of the background image are no longer statistically independent.

In certain embodiments, the additional impeding light in the area overlapping with the local minimum is provided by re-shaping the intensity distribution of the impeding light.

In certain embodiments, the local minimum of the intensity distribution of the impeding light comprises zero intensity (or substantially zero intensity) in the absence of the additional impeding light and the local minimum of the intensity distribution of the impeding light comprises an intensity greater than zero in the presence of the additional impeding light.

In certain embodiments, the excitation light beam and/or the first impeding light beam (and optionally the second impeding light beam) is/are scanned over the sample. This may be achieved, e.g., by a galvanometric scanner. In particular, the first and/or second fluorescence signal(s) is/are obtained by de-scanning the fluorescence light from the sample and detecting the fluorescence light by a confocal point detector or an array of point detectors.

In certain embodiments, at each point of the intensity distribution at which the impeding light has a light intensity greater than a saturation intensity of the impeding light, the light intensity of the impeding light differs by 19 % or less, particularly 18 % or less, more particularly 17 % or less, even more particularly 16 % or less, even more particularly 15 % or less, even more particularly 14 % or less, even more particularly 13 % or less, even more particularly 12 % or less, even more particularly 11 % or less, even more particularly 10 % or less, even more particularly 9 % or less, even more particularly 8 % or less, even more particularly 7 % or less, even more particularly 6 % or less, even more particularly 5 % or less, even more particularly 4 % or less, even more particularly 3 % or less, even more particularly 2 % or less, even more particularly 1 % or less, between the intensity distribution in the presence of the additional impeding light at the neighboring local minimum and the intensity distribution in the absence of the additional impeding light.

In certain embodiments, in case of a single local minimum of the intensity distribution, at each point having a distance of 10 nm or more, particularly 20 nm or more, more particularly 30 nm or more, outside of the local minimum, a light intensity of the depletion light differs by 10 % or less, particularly 5 % or less, more particularly 2,5 % or less, between the intensity distribution in the presence of the additional depletion light in the area overlapping the local minimum and the intensity distribution in the absence of the additional depletion light, wherein particularly the points have a distance of 300 nm or less from the local minimum.

In certain embodiments, in case of more than one local minimum, at each point outside of a respective local minimum having a distance of 10 nm or more, particularly 20 nm or more, more particularly 30 nm or more, from a neighboring local minimum, a light intensity of the depletion light differs by 10 % or less, particularly 5 % or less, more particularly 2,5 % or less, between the intensity distribution in the presence of the additional depletion light and the intensity distribution in the absence of the additional depletion light, wherein particularly the points have a distance of 300 nm or less from the neighboring local minimum.

In certain embodiments, the method further comprises adjusting the light intensity of the additional impeding light at the local minimum to a value of 20 % or less, more particularly 10 % or less, even more particularly 5 % or less, even more particularly 2 % or less, most particularly 1 % or less, of a maximum light intensity of the impeding light, wherein the maximum light intensity refers to the impeding light in the absence of the additional impeding light at the local minimum. In other words, the light intensity of the additional impeding light is set to a small percentage of the light intensity at one or several locations of the intensity distribution having the highest light intensity of the entire intensity distribution. By providing only a small amount of additional impeding light, it is ensured that the overall shape of the intensity distribution is minimally affected, improving the accuracy of background correction.

In certain embodiments, the method comprises adjusting a light intensity of the additional impeding light by a variable amount independently of adjusting a power of the first impeding light beam.

The inventors have realized that by variably adjusting the light intensity of the additional impeding light at or near the local minimum without changing the power of the first impeding light beam, background correction can be significantly improved. This is due to the fact that the signal of interest (first fluorescence signal) and the background signal (second fluorescent signal) can be made essentially identical except at the local minimum. In contrast, disrupting the total intensity distribution by the methods known from the prior art results in additional light intensity at the minimum, but severely affects the overall shape of the intensity distribution, resulting in artefacts when the two resulting signals are subtracted during background correction.

An additional advantage of providing a variable amount of additional impeding light at the local minimum independently of the power of the first impeding light beam is that an optimal amount of additional impeding light required for background correction can be selected for any measurement condition, e.g., illumination source, optical setup, type of fluorophore, and type of sample.

Importantly, the variable amount of impeding light can be adjusted at any time, both before (e.g., during setup of the optical system or between measurements) and during measurements to optimize imaging conditions.

In certain embodiments, the adjusting the light intensity of the additional impeding light by the variable amount comprises selecting a light intensity value from at least two different discrete light intensity values above zero or from a continuous range of light intensity values (above zero) and setting the light intensity of the additional impeding light to the selected value, particularly gradually or in a stepwise manner.

Variably adjusting the amount of the additional impeding light may be performed in several different ways as described below.

In certain embodiments, the method further comprises modifying an amplitude distribution, a polarization or a phase distribution of the impeding light by a variable amount to provide the additional impeding light and/or to adjust the light intensity of the additional impeding light by the variable amount. In particular, the amplitude distribution, the polarization or the phase distribution is modified at or near a pupil plane of the objective. In this manner, the intensity distribution at and around the focal plane is altered by a desired amount, whereby preferably only a part of the intensity distribution around the local minimum is substantially changed. Modifying the phase distribution or amplitude distribution may be achieved by adjusting a wavefront modulator, e.g., a spatial light modulator, in the beam path of the impeding light, particularly the same wavefront modulator that is used to generate the phase or amplitude distribution resulting in the intensity distribution of the impeding light with the local minimum. In particular, this has the advantage that no additional optical elements are required to realize the method of the invention.

Of course, modifying the phase or amplitude distribution may also be performed by a separate additional wavefront modulator within the scope of the present invention.

In certain embodiments, the method further comprises modulating a wavefront of the impeding light, such that a phase pattern and/or an amplitude pattern of the impeding light is generated in a back aperture (also termed exit pupil) of an objective through which the sample is illuminated by the impeding light.

In certain embodiments, the phase pattern or the amplitude pattern is generated by a wave front modulator, more particularly a spatial light modulator.

In certain embodiments, the wave front modulator comprises an active area arranged in a pupil plane (that is, a plane conjugated to the back aperture) or intersecting a pupil plane of the objective.

In certain embodiments, the method further comprises modifying the phase distribution or amplitude distribution by adjusting the wave front modulator to provide the additional impeding light in the area overlapping with the local minimum. In particular, the method comprises modifying the phase distribution or amplitude distribution by a variable amount by adjusting the wave front modulator to adjust the light intensity of the additional impeding light by the variable amount.

Wavefront modulation of the first impeding light beam may be used to generate the intensity distribution with the local minimum, e.g., by passing the first impeding light beam through a vortex phase plate or reflecting the first impeding light beam on a phase modulating spatial light modulator comprising a vortex-shaped phase pattern and subsequently circularly polarizing the first impeding light beam to generate a donut shaped intensity distribution at the focus or by other methods described in the present specification. Furthermore, the wavefront modulation may be modified to generate the additional impeding light in the area overlapping the local minimum. This modification may be adjusted to a desired amount to control the intensity of the additional impeding light at the local minimum. This has the advantage that no additional optical elements are required to realize the method according to the invention.

In certain embodiments, the method comprises modulating the wavefront of the impeding light by an array of tiltable micromirrors, such that an amplitude pattern of the impeding light is generated in the back aperture of the objective and modifying the amplitude pattern by tilting a subset of the micromirrors to provide the additional impeding light in the area overlapping with the local minimum. In particular, the method comprises modifying the amplitude pattern by a variable amount by tilting a subset of the micromirrors to adjust the light intensity of the additional impeding light by the variable amount. In other words, the wave front modulator is the array of tiltable micromirrors according to this embodiment.

This embodiment has the advantage that the light intensity of the additional impeding light can be controlled very accurately and incremented in very small amounts. In addition, switching the additional impeding light at the local minimum on and off is extremely fast, e.g., up to about 100 kHz. Such fast switching offers the possibility to measure the first fluorescence signal (fluorescence signal of the sample) and the second fluorescent signal (background fluorescence signal) pixel by pixel during scanning the sample with the detector to acquire a scanning fluorescence microscopy image.

In certain embodiments, the wavefront of the impeding light is modulated such that a vortex-shaped phase pattern of the impeding light is obtained at the back aperture of the objective, wherein the vortex-shaped phase pattern comprises a phase increasing from zero to a maximum value, particularly $2\pi$, in a circumferential direction in respect of an optical axis of the first impeding light beam, wherein the method further comprises circularly polarizing the first impeding light beam after obtaining the vortex-shaped phase pattern, and wherein the method further comprises modifying the phase pattern to generate the additional impeding light in the area overlapping with the local minimum. In particular, the method comprises modifying the phase pattern by a variable amount to adjust the light intensity of the additional impeding light.

This type of wavefront modulation of the first impeding light beam results in a donut shaped intensity distribution with a central local minimum at the focus.

In certain embodiments, the vortex-shaped phase pattern is modified by overlaying a ring or circular shaped phase pattern having a constant phase with the vortex-shaped phase pattern in the back aperture of the objective to generate the additional impeding light in the area overlapping with the local minimum. In particular, the method further comprises controlling an area of the ring or circular shaped pattern to adjust the light intensity of the additional impeding light by the variable amount.

This modification generates additional impeding light essentially only at the center of the donut shaped intensity distribution. Therein, increasing the inner radius of the ring-shaped pattern of a constant phase value in a plane perpendicular to the optical axis leads to a smaller spot of additional impeding light at the center of the intensity distribution at the focus. Furthermore, in particular, by increasing the area of the ring or circular shaped pattern, the intensity of the additional impeding light is increased. For example, the ring- or circular shaped pattern can be generated by a phase-modulating spatial light modulator. This has the advantage that the location at which the additional impeding light is generated, and its intensity can be easily tuned and switched relatively quickly by controlling the active area of the spatial light modulator.

In certain embodiments, the vortex-shaped phase pattern is modified by modifying the maximum value of the phase pattern to adjust the light intensity of the additional impeding light by the variable amount. A common phase pattern used to generate a donut shaped intensity distribution in STED microscopy is a vortex shaped phase pattern increasing from zero to a maximum value of $2\pi$ and circularly polarizing the patterned light beam leading to destructive interference at the center of the intensity distribution. By slightly modifying the maximum value (e.g., reducing the maximum value from $2\pi$ to $1,9\pi$, a slight mismatch with the circular polarization is obtained which generates a small amount of additional impeding light at the center (local minimum) of the donut shaped intensity distribution. The amount of additional impeding light can then easily be tuned by adjusting the maximum value. This adjustment can be realized, e.g., by reflecting the first impeding light beam on a phase-modulating spatial light modulator, which offers easy tuning and relatively fast switching of the phase pattern.

In certain embodiments, the wavefront of the impeding light is modulated such that a phase pattern comprising a first area comprising a constant first phase and a second area comprising a constant second phase, which differs from the first phase, particularly by a difference of $\pi$, is generated, wherein the first area and the second area each extend perpendicular to an optical axis of the first impeding light beam, wherein particularly the method further comprises adjusting the first phase and/or the second phase or adjusting the size of the first area and/or the second area to adjust the light intensity of the additional impeding light by the variable amount.

Such patterns can be realized easily by structured phase plates.

In certain embodiments, the first area and the second area are separated along a line which extends perpendicular to the optical axis, wherein particularly the impeding light beam is linearly polarized in a plane parallel to the line.

Such a phase pattern comprising a linear phase jump results in an intensity distribution with a line-shaped local minimum (see Klar, TA, Engel E, Hell SW: Breaking Abbe's diffraction resolution limit in fluorescence microscopy with stimulated emission depletion beams of various shapes; Physical Review E, vol. 64, 2001, 066613-1 - 066613-9). By splitting the first impeding light beam in two partial beams of different polarization and separately modulating their wavefronts by appropriate structured phase plates, more complex intensity distributions, such as a clover leaf shaped distributions with two intersecting line shaped minima can be achieved.

In particular, by changing the amount of the phase jump or the relative size of the first area and the second area, destructive interference at the center of the intensity distribution is reduced, thereby producing additional impeding light at the local minimum.

In certain embodiments, the first area is circular, and the second area is shaped as a circular ring around the first area. Such a pattern can generate a so-called bottle beam intensity distribution with a central minimum at the focus. The bottle beam distribution has the advantage of a steep intensity increase (therefore a small central minimum) in the z-direction (along the optical axis) and is therefore commonly combined with a donut shaped intensity distribution in 3D STED microscopy.

For this embodiment, in particular, the additional impeding light at the local minimum may be produced by adjusting the amount of the phase jump between the first and the second area or by adjusting the relative size of the first area and the second area.

In certain embodiments, the method further comprises modifying a phase pattern of the impeding light by a first polarization modifying element and rotating the first polarization modifying element around an optical axis of the first impeding light beam by an angle smaller than 45° to provide the additional impeding light in the area overlapping with the local minimum. In particular, the first polarization modifying element is rotated around the optical axis by a variable angle smaller than 45° to adjust the light intensity of the additional impeding light by the variable amount. Therein, in particular, the first polarization modifying element is a phase plate or an electro optical modulator.

In particular, the phase pattern may be a vortex shaped phase pattern, particularly increasing from 0 to $2\pi$, in a circumferential direction with respect to the optical axis.

By circular polarization of a beam carrying this pattern, a donut shaped intensity distribution with a central intensity minimum is formed. The rotation of the first polarization modifying element by a small angle produces a slight mismatch between the circular polarization direction and the direction of increasing phase in the vortex shaped pattern. Thus, due to the loss of destructive interference at the center of the intensity distribution, additional impeding light is generated at the local minimum. The intensity of this light can be advantageously tuned by selecting the angle about which the first polarization modifying element is rotated. Using an electro optical modulator as a first polarization modifying element offers the advantage of fast switching of the additional impeding light.

In certain embodiments, the first polarization modifying element is rotated around the optical axis by a variable angle smaller than 40°, particularly smaller than 35°, even more particularly smaller than 30°, even more particularly smaller than 25°, even more particularly smaller than 20°, even more particularly smaller than 15°, even more particularly smaller than 10°, most particularly smaller than 5°.

In certain embodiments, the method further comprises generating a phase pattern of the first impeding light beam by a first active area of a wave front modulator, subsequently rotating the polarization direction of the impeding light by an angle by means of a second polarization modifying element, particularly an electro optical modulator, subsequently further modulating the first impeding light beam by a second active area of a polarization-sensitive wave front modulator and adjusting the angle to provide the additional impeding light in the area overlapping with the local minimum. In particular, the angle is adjusted by a variable amount to adjust the light intensity of the additional impeding light by the variable amount. In particular, the second polarization modifying element is an electro optical modulator.

In certain embodiments, the method further comprises generating the phase pattern in the impeding light by the first active area in a first polarization direction and generating a further phase pattern in the impeding light by the second active area in a second polarization direction perpendicular to the first polarization direction.

A light microscope with an optical setup having the above-described features is described in patent application DE 10 2014 113 716 A1. According to one embodiment described therein (which is also within the scope of the present invention), the first impeding light beam is linearly polarized and then sequentially modulated by a first and a second active area of a phase-modulating spatial light modulator (SLM, serving as first and second wave front modulator according to the terminology used above), wherein the polarization direction of the first impeding light beam is turned between the first active area and the second active area by passing a quarter wave plate twice or passing a half wave plate once (equivalent to the second polarization modifying element). The first active area of the SLM is oriented such that only a first polarization direction of the first impeding light beam is wavefront modulated, wherein a second polarization direction of the first impeding light beam which is perpendicular to the first polarization direction is unaffected. Vice versa, the second active area of the SLM affects only the phase pattern in the second polarization direction, but not in the first polarization direction. Thereby, two independent phase patterns can be imprinted on a single light beam, for example to generate an overlay of a donut-shaped intensity distribution and a bottle beam shaped intensity distribution at the focus.

According to a further embodiment described in DE 10 2014 113 716 (which is also within the scope of the present invention), the spatial light modulator with its two active areas is replaced by two fixed phase plates between which a half wave plate is oriented. In this setup, the first phase plate modulates only the component of the light beam having the first polarization direction, the second phase plate modulates only the component of the light beam having the second polarization direction, and the polarization of the light beam is turned by 90° by the half wave plate.

In the described setups or variants thereof, additional impeding light at the local minimum of the intensity distribution may either be generated according to the present invention by adjusting the phase pattern introduced by the first wave front modulator or the second wave front modulator, particularly as described above.

Alternatively, the polarization of the light beam can be rotated between the first and the second wave front modulator by an angle less than 90°, such that the polarization sensitive second wave front modulator modulates also the component of the light beam having the first polarization direction (at least by a small amount). In this manner, additional impeding light at the local minimum may be generated.

This may be realized by rotating the wave plates in the setup described in DE 10 2014 113 716 by a small angle. According to this variant, the quarter wave plate or half wave plate is the second polarization modifying element. Of course, the phase plates could also be replaced by electro optical modulators according to the present invention.

Alternatively, a separate second polarization modifying element, particularly an electro optical modulator (EOM), may be provided between the first wave front modulator and the second wave front modulators.

Fast switching of the additional impeding light may be realized by such an EOM serving as the second polarization modifying element, particularly at a speed sufficient for detecting the first fluorescence signal (fluorescence of interest) and the second fluorescence signal (background fluorescence) pixel by pixel.

To adjust the intensity of the additional impeding light at the local minimum, the angle of the second polarization modifying element (e.g., EOM) with respect to the first and second polarization direction may be adjusted before or after switching the EOM on.

Therefore, a compact single beam setup as described in DE 10 2014 113 716 combined with the possibility of fast switching of background correction can be obtained by the above-described embodiment.

In certain embodiments, the method further comprises illuminating the sample in the area overlapping with the local minimum by a second impeding light beam capable of impeding the fluorescence of the fluorescent dye molecules, particularly by inducing stimulated emission depletion, in the fluorescent dye molecules, and particularly controlling the intensity of the additional light beam to adjust the light intensity of the additional impeding light by the variable amount.

Providing an additional light beam of impeding light offers the possibility to provide a controlled amount of additional impeding light independently of the first impeding light beam without modifying phase or amplitude patterns.

In certain embodiments, the second impeding light beam comprises a power or a maximum intensity which is smaller than a power of the first impeding light beam. In particular, the power or the maximum intensity of the second impeding light beam is 20 % or less, particularly 15 % or less, more particularly 10 % or less, even more particularly 5 % or less, even more particularly 2 % or less, most particularly 1 % or less, of the power or the maximum intensity of the first impeding light beam.

This provides a controlled amount of additional impeding light at the local minimum while affecting the overall shape of the intensity distribution of the impeding light by a minimal amount.

In certain embodiments, the method further comprises generating the second impeding light beam by splitting impeding light from the first impeding light beam, particularly by a beam splitter, prior to generating the intensity distribution comprising the at least one local minimum.

In particular, the second impeding light beam is then coupled into the beam path of the first impeding light beam, particularly bypassing wavefront modulators used to generate the intensity distribution.

In particular, the second impeding light beam is split from the first impeding light beam by a polarizing beam splitter, wherein an intensity ratio between the first impeding light beam and the second impeding light beam is set by adjusting an angle of a third polarization modifying element, particularly a half wave plate or an electro optical modulator (EOM), positioned in a beam path of the impeding light between a light source for generating the first impeding light beam and the polarizing beam splitter.

Advantageously, the above-described embodiments allow to generate two impeding light beams of selectable intensity by a single light source.

In certain embodiments, the method further comprises generating the first impeding light beam by a first impeding light source and generating the second impeding light beam by a second impeding light source.

In certain embodiments, the method further comprises scanning the sample to obtain the first fluorescence signal at a plurality of pixels of a detector constituting a plurality of lines along a scanning direction and correcting the first fluorescence signal by the second fluorescence signal for each pixel or for each line.

In other words, during pixel-wise scanning of the sample, the first fluorescence signal and the second fluorescence signal from a first pixel (the same first pixel) may be detected sequentially (at a switching speed of the additional impeding light which is significantly faster than the scanning speed), and subsequently after moving the detector with respect to the sample, the first fluorescence signal and the second fluorescence signal may be obtained from a second pixel. This process is then repeated to scan the entire sample. This embodiment is preferred in case the speed of the applied switching mechanism of the additional impeding light is sufficient, since the background correction is virtually unaffected by effects such as sample drift, photobleaching of the fluorescent dye molecules and photo damage to the sample.

In certain embodiments, in particular during pixel-wise scanning of the sample, the method comprises generating a temporal series of first pulses and a temporal series of second pulses of the impeding light, wherein the first pulses are interleaved with the second pulses, and wherein the additional impeding light is provided in the area overlapping with the local minimum during the second pulses.

This improves the quality of the background correction, since the signals generated by the first and second pulses are similarly affected by temporal effects such as sample drift, photo bleaching and the like.

In particular, such pulses can be obtained by a pulsed laser source or pulsed laser sources capable of generating the first impeding light beam. The first pulses are interleaved with the second pulses, meaning that each second pulse occurs between two first pulses, and each first pulse occurs between two second pulses. In particular, a total background corrected fluorescence signal is generated by accumulating detected photons occurring after each first pulse and detected photons occurring after each second pulse. More particularly, the detected photons are accumulated by a single counter which alternately counts up after each first pulse and down after each second pulse.

In certain embodiments, the second pulses are generated by splitting a partial light beam from the first impeding light beam and delaying the pulses of the partial light beam.

In certain embodiments, the first pulses are generated by a first pulsed laser source and the second pulses are generated by a second pulsed laser source.

In certain embodiments, the second pulses are coupled into the beam path after the optical modulation system, such that only the first pulses, but not the second pulses are modulated by the optical modulation system.

Alternatively to pixel-wise scanning and pulse-interleaved detection described above, during line-wise scanning of the sample, the first fluorescence signal is detected during scanning along a line on the sample, the additional impeding light is subsequently switched on, and the second fluorescence signal is detected during a further scan along the line. For example, the first scan may occur in a first direction and the second scan may be performed in the opposite direction. A line scan provides background correction which is affected by sample drift, photobleaching and similar effects by a relatively small amount (compared to acquiring an entire image before switching on the additional impeding light), while being possible at moderate switching speed of the additional impeding light.

Yet alternatively, an entire first image may be obtained by scanning the sample in the absence of the additional impeding light at the local minimum, and subsequently a second image may be obtained by scanning the sample in the presence of the additional impeding light at the local minimum, wherein the second image is subtracted from the first image.

A second aspect of the invention relates to a light microscopy device for executing the method according to the first aspect, wherein the light microscopy device comprises at least one light source for generating an excitation light beam and a first impeding light beam for illuminating a sample comprising fluorescent dye molecules, wherein the excitation light beam comprises excitation light capable of exciting the fluorescent dye molecules and the first impeding light beam comprises impeding light capable of impeding the fluorescence of the fluorescent dye molecules, particularly by inducing stimulated emission depletion of the fluorescent dye molecules.

The light microscopy device further comprises an optical modulation system for generating an intensity distribution of the impeding light with at least one local minimum, a control device configured to control the light microscopy device, such that additional impeding light is generated in an area overlapping with the local minimum, and a detector for obtaining a fluorescence signal from the illuminated sample.

Moreover, the light microscopy device comprises a computation device configured to correct a first fluorescence signal obtained by the detector from the area overlapping with the local minimum in the absence of the additional impeding light by a second fluorescence signal obtained by the detector from the area overlapping with the local minimum in the presence of the additional impeding light.

The optical modulation system and the control device are configured such that at each point of the intensity distribution at which the impeding light has a light intensity greater than a saturation intensity of the impeding light, the light intensity of the impeding light differs by 20 % or less, particularly 10 % or less, more particularly 5 % or less, even more particularly 2,5 % or less between the intensity distribution in the presence of the additional impeding light and the intensity distribution in the absence of the additional impeding light. The optical modulation system and the control device are configured such that the intensity distribution of the impeding light comprises the local minimum both in the presence of the additional impeding light and in the absence of the additional impeding light.

All embodiments, effects and advantages stated above for the first aspect (light microscopy method) apply mutatis mutandis to the device according to the second aspect.

In certain embodiments, the light microscopy device comprises an adjusting means configured to adjust a light intensity of the additional impeding light by a variable amount independently of adjusting a power of the first impeding light beam.

In certain embodiments, the light microscopy device comprises an objective configured to illuminate the sample with the impeding light, and the optical modulation system comprises a wave front modulator configured to modulate a wavefront of the impeding light, such that a phase pattern and/or amplitude pattern of the impeding light is generated in a back aperture of the objective. In particular, the objective is also used to collect fluorescence light emitted by the fluorescent dye molecules, which is then detected by the detector, particularly in a confocal plane of the objective.

In certain embodiments, the adjusting means is configured to adjust the wave front modulator to modify the phase pattern and/or the amplitude pattern by a variable amount to adjust the light intensity of the additional impeding light by the variable amount.

In certain embodiments, the adjusting means is configured to adjust the light intensity of the additional impeding light by the variable amount by receiving an input comprising a light intensity value selected from at least two different discrete light intensity values above zero or from a continuous range of light intensity values and setting the light intensity of the additional impeding light to the selected value, particularly gradually or in a stepwise manner.

In certain embodiments, the adjusting means is configured to modify an amplitude distribution, a polarization or a phase distribution of the impeding light by a variable amount to adjust the light intensity of the additional impeding light by the variable amount.

In certain embodiments, the adjusting means is configured to adjust the light intensity of the additional impeding light at the local minimum to a value of 20 % or less, more particularly 10 % or less, even more particularly 5 % or less, of a maximum light intensity of the impeding light, wherein the maximum light intensity refers to the impeding light in the absence of the additional impeding light at the local minimum.

In certain embodiments, the control device is configured to modify an amplitude distribution, a polarization or a phase distribution of the impeding light to provide the additional impeding light in the area overlapping with the local minimum of the intensity distribution.

In certain embodiments, the optical modulation system is configured to modulate a wavefront of the impeding light, such that a phase pattern and/or amplitude pattern of the impeding light is generated in a back aperture of an objective through which the sample is illuminated by the impeding light.

In certain embodiments, the optical modulation system comprises a wave front modulator comprising an active area arranged in a pupil plane or intersecting a pupil plane of the objective.

In certain embodiments, the adjusting means is configured to modify the phase distribution or amplitude distribution by a variable amount by adjusting the wave front modulator to adjust the light intensity of the additional impeding light by the variable amount.

In certain embodiments, the optical modulation system comprises an array of tiltable micromirrors for modulating the wavefront of the impeding light, such that an amplitude distribution of the impeding light is generated in the back aperture of the objective, wherein the control device is configured to modify the amplitude pattern by tilting a subset of the micromirrors to provide the additional impeding light in the area overlapping with the local minimum. In particular, the adjusting means is configured to modify the amplitude pattern by a variable amount by tilting a subset of the micromirrors to adjust the light intensity of the additional impeding light by the variable amount.

In certain embodiments, the optical modulation system comprises a wave front modulator, particularly a phase-modulating spatial light modulator or a phase plate comprising a vortex-shaped phase pattern comprising a phase increasing from zero to a maximum value, particularly $2\pi$, in a circumferential direction in respect of an optical axis of the first impeding light beam or configured to generate a vortex-shaped phase pattern comprising a phase increasing from zero to a maximum value, particularly $2\pi$, in a circumferential direction in respect of the optical axis of the first impeding light beam, and a polarization modifying element configured to circularly polarize the first impeding light beam, wherein the control device is configured to modify the wave front modulator to provide the additional impeding light in the area overlapping with the local minimum. In particular, the adjusting means is configured to modify the wave front modulator by a variable amount to adjust the light intensity of the additional impeding light. In particular, an active area of the wave front modulator is positioned at a pupil plane, near a pupil plane or at an angle to a pupil plane of the objective, such that a vortex-shaped phase pattern of the impeding light is obtained at the back aperture of the objective.

This setup generates a donut shaped intensity distribution at and around the focus, which can be adjusted to include additional impeding light at the local minimum by the adjusting means.

In certain embodiments, the control device is configured to control the optical modulation system, such that a ring or circular shaped phase pattern having a constant phase is overlaid with the vortex-shaped phase pattern to generate the additional impeding light in the area overlapping with the local minimum.

In certain embodiments, the adjusting means is configured to control an area of the ring or circular shaped pattern to adjust the light intensity of the additional impeding light by the variable amount, or the adjusting means is configured to modify the maximum value of the phase pattern to adjust the light intensity of the additional impeding light by the variable amount.

In certain embodiments, the optical modulation system comprises a wave front modulator, particularly a phase-modulating spatial light modulator, configured to modulate the wavefront of the impeding light, such that a phase pattern comprising a first area comprising a constant first phase and a second area comprising a constant second phase, which differs from the first phase, particularly by a difference of $\pi$, is generated, wherein the first area and the second area each extend perpendicular to an optical axis of the first impeding light beam, and wherein the control device is configured to adjust the first phase and/or the second phase or the control device is configured to adjust the size of the first area and/or the second area to provide the additional impeding light in the area overlapping with the local minimum. In particular, the adjusting means is configured to adjust the first phase and/or the second phase or the adjusting means is configured to adjust the size of the first area and/or the second area to adjust the light intensity of the additional impeding light by the variable amount.

In certain embodiments, the first area and the second area are separated along a line which extends perpendicular to the optical axis, particularly a line which is parallel to a linear polarization direction of the first impeding light beam. Such a phase pattern can be used to generate a line-shaped intensity minimum at the focus.

In certain embodiments, the first area is circular, and the second area is shaped as a circular ring around the first area. This phase pattern can be used to generate a bottle beam shaped intensity distribution at the focus.

In certain embodiments, the optical modulation system comprises a first polarization modifying element, wherein the control device is configured to rotate the first polarization modifying element around an optical axis of the first impeding light beam by an angle smaller than 45° to provide the additional impeding light in the area overlapping the local minimum. In particular, the adjusting means is configured to rotate the first polarization modifying element around the optical axis of the first impeding light beam by a variable angle smaller than 45° to adjust the light intensity of the additional impeding light by the variable amount.

In certain embodiments, the optical modulation system comprises a first wave front modulator configured to generate a phase pattern of the first impeding light beam, a second polarization-sensitive wave front modulator, and a second polarization modifying element arranged in a beam path of the first impeding light beam between the first wave front modulator and the second wave front modulator, wherein the second polarization modifying element is configured to rotate the polarization direction of the impeding light by an angle, wherein the control device is configured to adjust the angle to provide the additional impeding light in the area overlapping the local minimum. In particular, the adjusting means is configured to adjust the angle by a variable amount to adjust the light intensity of the additional impeding light by the variable amount.

In particular, the first wave front modulator is configured to generate the phase pattern in a first polarization direction of the impeding light and the second wave front modulator is configured to generate a further phase pattern in a second polarization direction of the impeding light, wherein the second polarization direction is perpendicular to the first polarization direction.

In certain embodiments, the light microscopy device comprises a beam splitter configured to split impeding light from the first impeding light beam to generate a second impeding light beam before the intensity distribution is generated by the optical modulation system, wherein the control device is configured to control the light microscopy device, such that the second impeding light beam illuminates the sample to provide the additional impeding light in the area overlapping the local minimum. In particular, the adjusting means is configured to adjust the amount of light split from the first impeding light beam by the beam splitter for controlling the intensity of the second impeding light beam to adjust the light intensity of the additional impeding light by the variable amount.

In particular, the beam splitter is a polarizing beam splitter, wherein the light microscopy device comprises a third polarization modifying element, particularly a half wave plate or an electro optical modulator, positioned in a beam path of the impeding light between the light source and the polarizing beam splitter, wherein the adjusting means is configured to adjust an angle of the third polarization modifying element to set an intensity ratio between the first impeding light beam and the second impeding light beam to adjust the light intensity of the additional impeding light by the variable amount.

In certain embodiments, the light microscopy device comprises a first impeding light source configured to generate the first impeding light beam and a second impeding light source configured to generate a second impeding light beam for generating the additional impeding light, wherein the control device is configured to adjust the light microscopy device, such that the second impeding light beam illuminates the sample to provide the additional impeding light in the area overlapping the local minimum. In particular, the light microscopy device comprises an intensity modulator configured to control a light intensity of the second impeding light beam, wherein the adjusting means is configured to control the intensity modulator to control the light intensity of the second impeding light beam by the variable amount.

In certain embodiments, the impeding light source is a pulsed laser source configured to generate the first impeding light beam, wherein the light microscopy device comprises a beam splitter configured to split the first impeding light beam into a first branch and a second branch, wherein the light microscopy device further comprises a pulse delaying element configured to generate a temporal delay of second pulses traveling on the second branch with respect to first pulses traveling on the first branch.

## Brief description of the drawings

Fig. 1    shows a schematic of a light microscopy device according to the invention;

Fig. 2    schematically depicts a part of a sample comprising fluorescent dye molecules which is illuminated by the excitation light and the impeding light by the light microscopy device;

Fig. 3    shows schematic intensity plots depicting a part of an intensity distribution of the impeding light around the local minimum with (Fig. 3B-C) and without (Fig. 3A) additional impeding light;

Fig. 4    shows phase patterns of the first impeding light beam used to create a donut shaped intensity distribution at the focus, with (Fig. 4B-C) and without (Fig. 4A) alterations to generate additional impeding light at the local minimum;

Fig. 5    shows phase patterns of the first impeding light beam used to create an intensity distribution with a line shaped minimum at the focus, with (Fig. 5B-C) and without alterations to generate additional impeding light at the local minimum;

Fig. 6      shows phase patterns of the first impeding light beam used to create a bottle beam shaped intensity distribution at the focus, with (Fig. 6B-C) and without alterations to generate additional impeding light at the local minimum;

Fig. 7      shows a light microcopy device according to an embodiment of the invention using an array of tiltable micromirrors as a wave front modulator to generate additional impeding light at the local minimum;

Fig. 8      shows a light microcopy device according to an embodiment of the invention using a phase-sensitive spatial light modulator as a wave front modulator to generate additional impeding light at the local minimum;

Fig. 9      shows a light microcopy device according to an embodiment of the invention using a phase-sensitive spatial light modulator with two active areas and a polarization modifying element as a wave front modulator to generate two phase patterns in different polarization directions of the first impeding light beam, wherein the spatial light modulator is controlled to generate additional impeding light at the local minimum;

Fig. 10      shows a light microcopy device according to an embodiment of the invention using a phase-sensitive spatial light modulator with two active areas and a polarization modifying element as a wave front modulator to generate two phase patterns in different polarization directions of the first impeding light beam, wherein an angle of the polarization modifying element is controlled to generate additional impeding light at the local minimum;

Fig. 11      shows a light microcopy device according to an embodiment of the invention using two phase plates and a second polarization modifying element as a wave front modulator to generate two phase patterns in different polarization directions of the first impeding light beam, wherein a phase plate is rotated to generate additional impeding light at the local minimum;

Fig. 12      shows a light microcopy device according to an embodiment of the invention using two phase plates and a second polarization modifying element as a wave front modulator to generate two phase patterns in different polarization directions of the first impeding light beam, wherein the polarization modifying element is rotated to generate additional impeding light at the local minimum;

Fig. 13      shows a light microcopy device according to an embodiment of the invention using a phase-sensitive spatial light modulator with two active areas and a second polarization modifying element in a holographic configuration as a wave front modulator to generate two phase patterns in different polarization directions of the first impeding light beam, wherein the spatial light modulator is controlled to generate additional impeding light at the local minimum;

Fig. 14      shows a light microcopy device according to an embodiment of the invention using a phase-sensitive spatial light modulator with two active areas and a second polarization modifying element in a holographic configuration as a wave front modulator to generate two phase patterns in different polarization directions of the first impeding light beam, wherein the second polarization modifying element is rotated to generate additional impeding light at the local minimum;

Fig. 15      shows a light microcopy device according to an embodiment of the invention using two spatial light modulators in parallel beam paths of the impeding light to generate two phase patterns in different polarization directions of the first impeding light beam, wherein at least one of the spatial light modulators are controlled to generate additional impeding light at the local minimum;

Fig. 16      shows a light microcopy device according to an embodiment of the invention comprising a wavefront modulator and a first polarization modifying element configured to generate a donut shaped intensity distribution at the focus, wherein the first polarization modifying element is rotatable by a small variable angle to provide additional impeding light at the local minimum;

Fig. 17      shows a light microcopy device according to an embodiment of the invention comprising a polarizing beam splitter configured to generate a second impeding light beam from the first impeding light beam and a third polarization modifying element to adjust the intensity of the second impeding light beam to provide additional impeding light at the local minimum;

Fig. 18 shows a light microscopy device comprising a first light source for generating a first impeding light beam, a second light source for generating a second impeding light beam, and an intensity modulator to adjust the intensity of the second impeding light beam to provide additional impeding light at the local minimum;

Fig. 19 shows an example of an interleaved series of first pulses and second pulses from a pulsed laser source generating the impeding light, wherein the additional impeding light is generated during the second pulses;

Fig. 20 shows a light microscopy device comprising a pulsed laser source for generating the impeding light, as well as a beam splitter and a pulse delaying element for generating delayed second pulses.

## Description of the drawings

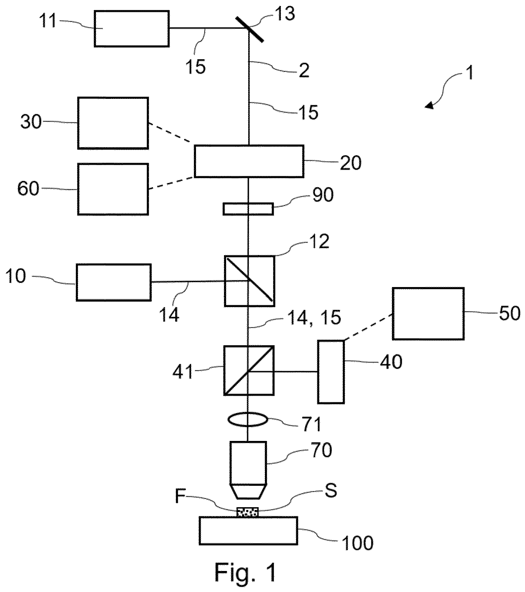

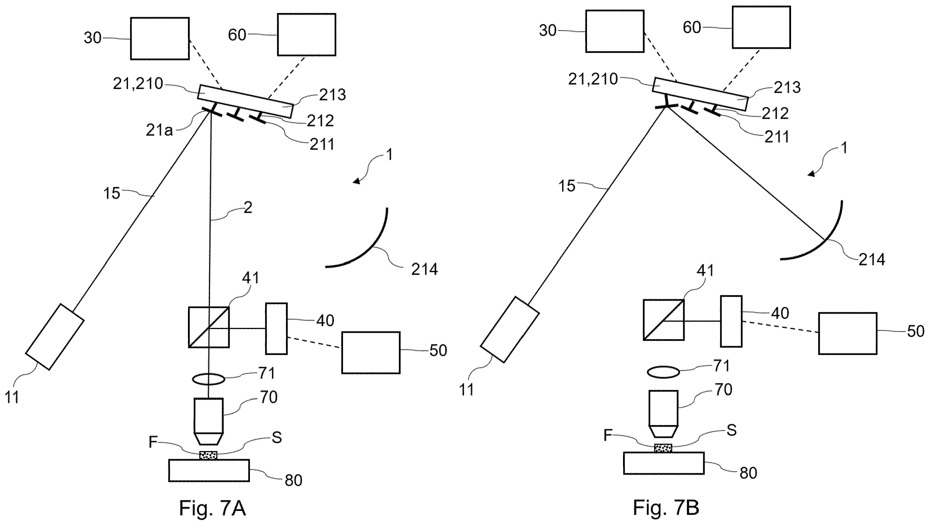

**Fig. 1** schematically depicts general aspects of the light microscopy device 1 according to the present invention. The light microscopy device 1 comprises an excitation light source 10 for generating an excitation light beam 14 comprising excitation light capable of exciting fluorescent dye molecules F in a sample S. The excitation light source 10 is particularly a laser source which creates pulses or a continuous wave of excitation light. The excitation light beam 14 is coupled into a beam path 2 of the light microscopy device 1 by a beam splitter 12. Additional optical components may be provided, e. g. to adjust the pulse length of the laser pulses of the excitation light in case of a pulsed laser source as known in the art (not shown). The excitation light source 10 and the excitation light beam are not explicitly shown in Fig. 7-18 and Fig. 20 described below, but may be set up, e.g., as shown in Fig. 1.

The light microscopy device 1 further comprises a first impeding light source 11 for generating a first impeding light beam 15 comprising impeding light I capable of impeding the fluorescence of the fluorescent dye molecules F, e.g., by inducing stimulated emission depletion (STED) of the fluorescent dye molecules F, in other words to induce a transition of the fluorescent dye molecules F from the excited state to a vibrational energy level above the ground state. In this case the wavelength of the impeding light I should be larger than the wavelength of the excitation light. The first impeding light beam 15 is coupled into the beam path 2 by a mirror 13.

Alternatively to the setup shown in Fig. 1, the excitation light and the impeding light I can also be generated from a single light source in the scope of the present invention. In this case, additional optical components such as further beam splitters and filters may be used to obtain the excitation light and the impeding light I at the desired wavelengths (not shown).

The combined excitation light beam 14 and first impeding light beam 15 pass through a tube lens 71 and an objective 70 and are thereby focused on a focal plane in a sample S containing fluorescent dye molecules F provided on a sample stage 100. The excitation light thereby excites the fluorescent dye molecules F in the vicinity of the focal plane causing them to emit fluorescence light. This light is collected by the objective 70 and reflected onto a detector 40 by a dichroic mirror 41 which is reflective for the fluorescence light, but transmissive for the excitation light and the impeding light I. In case of confocal imaging, to collect the signal in a confocal plane of the objective 70, a pinhole or an optical fiber may be used (not shown). As an alternative to confocal imaging, e.g., detector 40 may be an area detector. Instead of coupling the excitation light beam 14 into the beam path 2 by beam splitter 12, the beam splitter 41 may also be used to couple the excitation light beam 14 into the beam path 2.

To shape the first impeding light beam 15, such that a desired intensity distribution is obtained in and around the focal plane, an optical modulation system 20 is provided in the beam path 2. Thereby, in particular, a phase pattern or an amplitude pattern is generated in the first impeding light beam 15 by the optical modulation system 20 resulting in the intensity distribution. The optical modulation system 20 may comprise a wavefront modulator 21 with an active area which is located in a pupil plane, intersecting a pupil plane or close to a pupil plane of the objective 70. Therein, the pupil plane is conjugated to the back aperture of the objective 70.

The intensity distribution D is particularly chosen such that the light intensity at the local minimum M is as small as possible (ideally zero), and that the light intensity steeply increases around the local minimum M at least in the focal plane (x- and y-direction, perpendicular to the optical axis of the objective 70), and preferably also parallel to the optical axis (z-direction, perpendicular to the focal plane). This results in a very small spot or volume around the local minimum M where fluorescence of the fluorescent dye molecules F is not impeded, whereas ideally there is almost no fluorescence outside of this spot. Hence, an improved resolution is achieved.

In particular, the excitation light beam 14 is coupled into the beam path 2 between the optical modulation system 20 and the objective 70, such that the phase or amplitude pattern is not generated in the excitation light beam 14. In certain light microscopy devices 1, however, the excitation light beam 14 does run through the optical modulation system 20, and it may particularly be ensured by additional means that the phase pattern or amplitude pattern is not generated in the excitation light beam 14.

In some cases, e.g., to obtain a donut shaped intensity distribution, an appropriately oriented first polarization modifying element 90 (e.g., a quarter wave plate), is required in the beam path 2 as explained below. In Fig. 1, the polarization modifying element 90 is shown between the optical modulation system 20 and the beam splitter 12 at which the excitation light beam 14 is coupled into the beam path 2. Alternatively, the first polarization modifying element 90 may be arranged between the beam splitter 12 and the tube lens 71. In this case, the polarization of the excitation light beam 14 is also affected by the polarization modifying element 90.

According to the present invention, background fluorescence, which is a result, e.g., of direct excitation and incomplete depletion caused by the impeding light I, is removed from the fluorescence signal by a control measurement of the background fluorescence (but not the signal of interest). In this control measurement, additional impeding light I is provided in an area overlapping with the local minimum M. To this end, in particular, the optical modulation system 20 is controlled by a control device 30. In addition, the resulting light intensity of the additional impeding light I is optionally adjusted by a variable amount by an adjusting means 60. Alternatively, the control device 30 and the adjusting means 60 may control other components of the light microscopy device 1 as explained below. The control device 30 and the adjusting means 60 ensure that the intensity distribution D is only minimally changed outside of the local minimum M, in particular to reduce artifacts and further improve background correction.

The control device 30 and the adjusting means 60 may be separate components as illustrated for simplicity in Fig. 1 but can also be modules or functionalities provided in the same component or device.

Background correction, in other words obtaining a first fluorescence signal without the additional impeding light I, obtaining a second fluorescence signal with the additional impeding light I, and subtracting the second fluorescence signal from the first fluorescence signal, is performed by a computation device 50.

To obtain a fluorescence image of the sample, the sample S is scanned by the excitation light beam 14 and the first impeding light beam 15 using a scanner (not shown). Therein, background correction may be performed pixel by pixel, line by line or for an entire image depending on the speed of the optical modulation system 20.

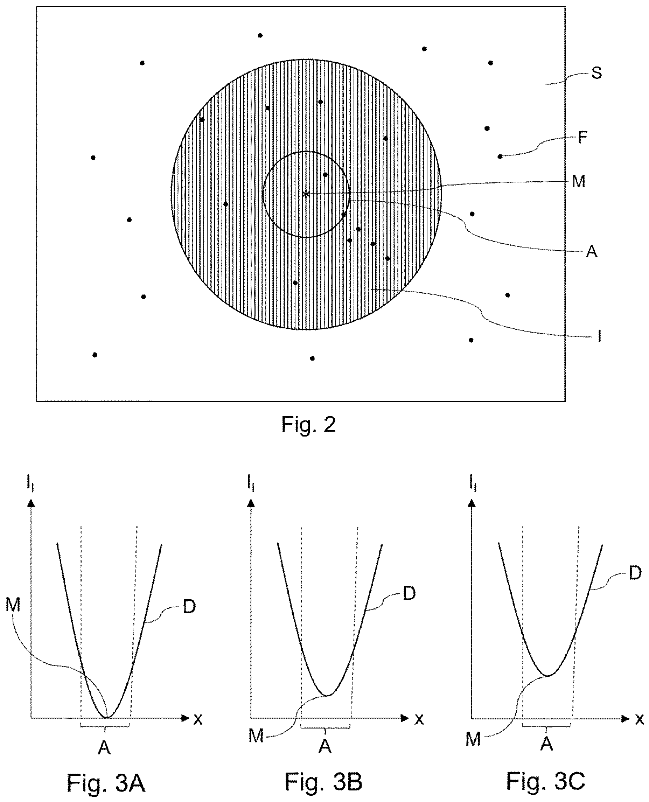

**Fig. 2** schematically shows a part of the sample S with the fluorescent dye molecules F which are distributed through the sample S. The sample S is shown in the focal plane (x-y-direction perpendicular to the optical axis of the objective 70). The local minimum M of the light intensity of the impeding light I is indicated by an asterisk.

A cross-hatched circular region around the local minimum M is illuminated by impeding light I, wherein the intensity of the impeding light I is not indicated in Fig. 2. In particular, the local minimum M is located at the center of the intensity distribution D. A circular area A around the local minimum M is further indicated. In this area A, the additional impeding light I is provided for the background measurement.

Of course, the shape of the impeding light I illustrated in Fig. 2 is only an example, and other shapes and distributions (including distributions with more than one local minimum M) are within the scope of the invention.

**Fig. 3** depicts a part of the intensity distribution D of the impeding light I around the local minimum M in a simplified manner. Simplified plots of the light intensity $I_l$ as a function of the x-coordinate (in the focal plane) are shown and the area A around the local minimum M where the additional impeding light I is provided is indicated. Fig. 3A shows the situation in the absence of the additional impeding light I, where the light intensity is zero at the local minimum M in this example. Fig. 3B and 3C illustrate intensity distributions D with different amounts of additional impeding light I provided in the area A. By means of the adjusting means 60 according to the invention, the desired amount of additional impeding light I may be selected or gradually adjusted (before or during a measurement), e.g., between the examples shown in Fig. 3B and 3C.

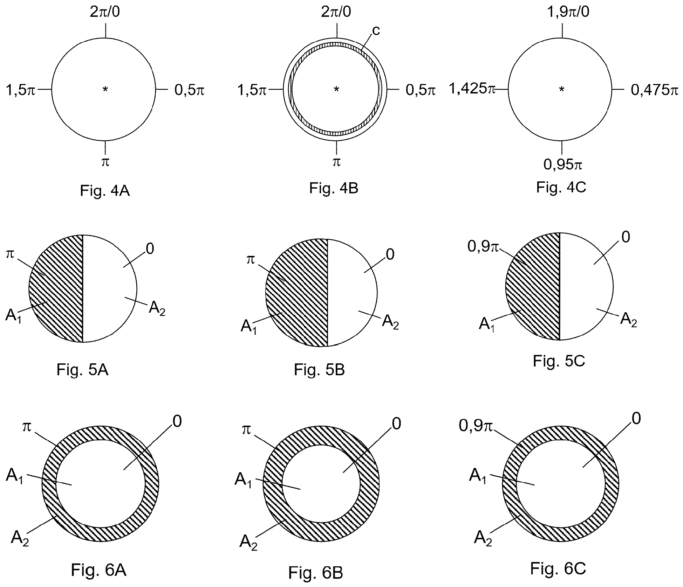

**Fig. 4-6** show examples of phase patterns which can be introduced to the first impeding light beam 15 at a pupil plane, intersecting a pupil plane or near a pupil plane to obtain a corresponding intensity distribution D with a local minimum M at the focus.

**Fig. 4A** shows a vortex-shaped phase pattern, where the phase increases, particularly gradually, from 0 to $2\pi$ in a circumferential direction with respect to the optical axis. This phase pattern results in a donut shaped intensity distribution at the focus with a narrow minimum intensity spot in the focal plane if the first impeding light beam 15 is circularly polarized prior to entering the objective 70. This pattern can be modified to obtain additional impeding light I at the central minimum M of the donut shaped distribution, e.g., as shown in Fig. 4B and 4C.

According to the example of Fig. 4B, a ring having a constant phase value C is overlaid with the vortex-shaped pattern shown in Fig. 4A. This results in additional impeding light I in the area A overlapping the local minimum M. The radial distance of the ring to the center of the phase pattern influences the size of the area A in which the additional impeding light I is provided: If the ring is moved further outside from the center, the resulting additional impeding light I is more concentrated at the center of the distribution. Furthermore, the area of the ring influences the light intensity $I_l$ of the additional impeding light I, wherein a larger area leads to an increased intensity $I_l$. Therefore, by adapting the area of the ring, the variable amount of impeding light may be tuned.

Another possibility of changing the vortex-shaped phase pattern to generate additional impeding light I at the center is depicted in Fig. 4C: The maximum phase value of the pattern is altered by a small amount, in this case from $2\pi$ to $1{,}9\pi$ and the function of phase increase in the circumferential direction is adapted accordingly. By adjusting the deviation from the previous maximum value, the light intensity of the additional impeding light I can be tuned.

**Fig. 5A-C** illustrate phase patterns which lead to a line shaped minimum in the focal plane. The initial pattern (Fig. 5A) for generating the intensity distribution D with the local minimum M consists of a first area $A_1$ of phase $\pi$ and a second area $A_2$ having the phase 0, separated by a line, in other words a linear phase jump. By shifting the line and thereby adapting the relative surface area of the first and second area $A_1$, $A_2$ (Fig. 5B), additional impeding light I is generated by imperfect destructive interference at the center of the distribution D. The intensity of the additional impeding light I can be tuned by adjusting the relative area. Alternatively, the phase value of the first area $A_1$ can be adjusted (Fig. 5C) to generate a slight mismatch and therefore imperfect destructive interference at the center. Further, alternatively, the phase of a part of the first area $A_1$ could be switched from $\pi$ to another value, e.g., 0.

**Fig. 6A** depicts a phase pattern with a circular first area $A_1$ of phase 0 and a ring shaped second area $A_2$ around the first area $A_1$ comprising a phase value of $\pi$. This pattern results in an intensity distribution around the focus which is called "bottle beam", and which is characterized by a steep intensity increase in the z-direction (parallel to the optical axis of the objective 70), and is thus commonly combined, e.g., with a donut shaped distribution to obtain a three-dimensional intensity distribution with a spot of relatively small dimensions, both in the x-y plane and in the z-direction.

Similar, to the patterns shown in Fig. 5A-C, the pattern of Fig. 6A may be altered by adjusting the relative surface area of the first area $A_1$ and the second area $A_2$ (Fig. 6B) or by adjusting the phase value of one of the areas $A_1$, $A_2$ (Fig. 6C) to obtain additional impeding light I in the area around the local minimum M.

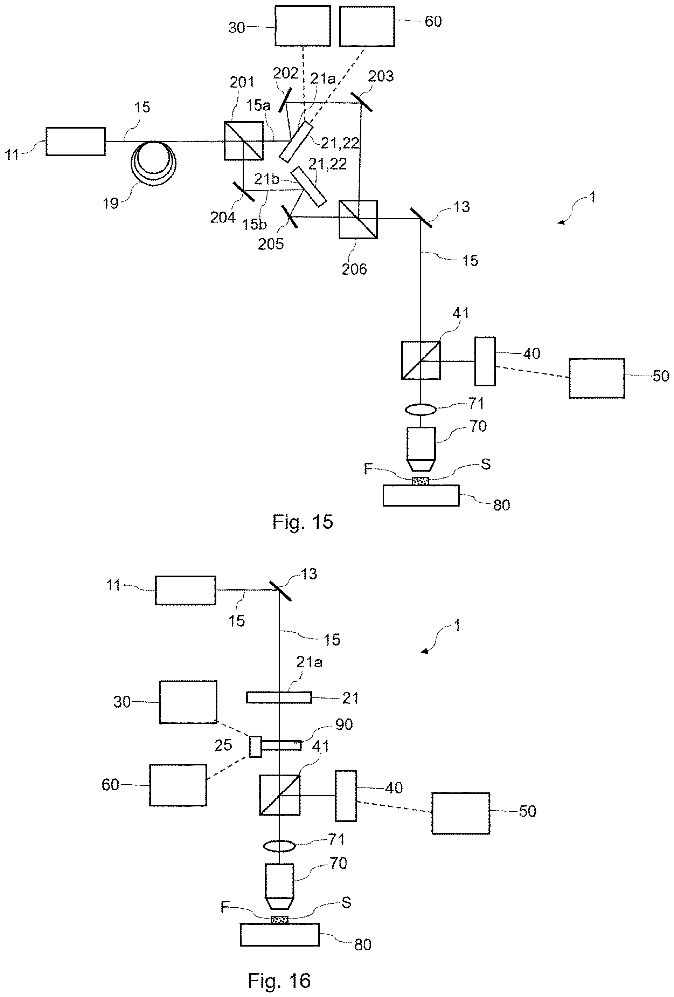

**Fig. 7-18 and 20** show different embodiments of the light microscopy device 1 which may be used to implement the method according to the invention. The excitation light source 10 and the excitation light beam 14 are not explicitly shown for simplicity (see Fig. 1) but are present in the light microscopy devices 1 according to the examples. In addition, an additional first polarization modifying element 90, which may be required to obtain certain intensity distributions (see Fig. 1) is not shown except in Fig. 16.

**Fig. 7A and 7B** illustrate a light microcopy device 1 where the optical modulation system 20 comprises a wave front modulator 21 which can generate an amplitude pattern across the beam cross-section (perpendicular to the optical axis): an array 210 of tiltable micromirrors 211, which is sometimes referred to as a digital light projector (DLP). The array 210 comprises a substrate 213, to which a plurality of micromirrors 211 are coupled by respective hinges 212. The micromirrors 211 are positioned on the substrate 213 in a two-dimensional arrangement. Three micromirrors 211 are depicted in Fig. 7 for simplicity (not drawn to scale), but the array 210 may comprise many more (e.g., hundreds to thousands) micromirrors 211. In response to an electrical signal, the micromirrors 211 can individually be tilted around the hinge 212 between a first configuration and a second configuration.

In **Fig. 7A,** the illustrated part of the first impeding light beam 15 is reflected by a micromirror 211 into the beam path 2 of the light microscopy device 1. In contrast, in the situation shown in Fig. 7B, said micromirror 211 is tilted such that the corresponding part of the first impeding light beam 15 hits a beam dump 214 outside of the beam path 2.

In this manner, by selectively coupling parts of the first impeding light beam 15 either into the beam path 2 or into the beam dump 214, the amplitude of the first impeding light beam 15 is modulated by the array 210 to generate the desired intensity distribution D at the focus. The amplitude pattern is modified by the signals of the control device 30 and optionally the adjusting means 60 which are coupled to the array 210 according to this embodiment.

In **Fig. 7A and 7B,** the excitation light source 10 and the corresponding excitation light beam 14 is not shown for simplicity, but the excitation light source 10 is particularly set up in an analogous manner as in the embodiment of Fig. 1.

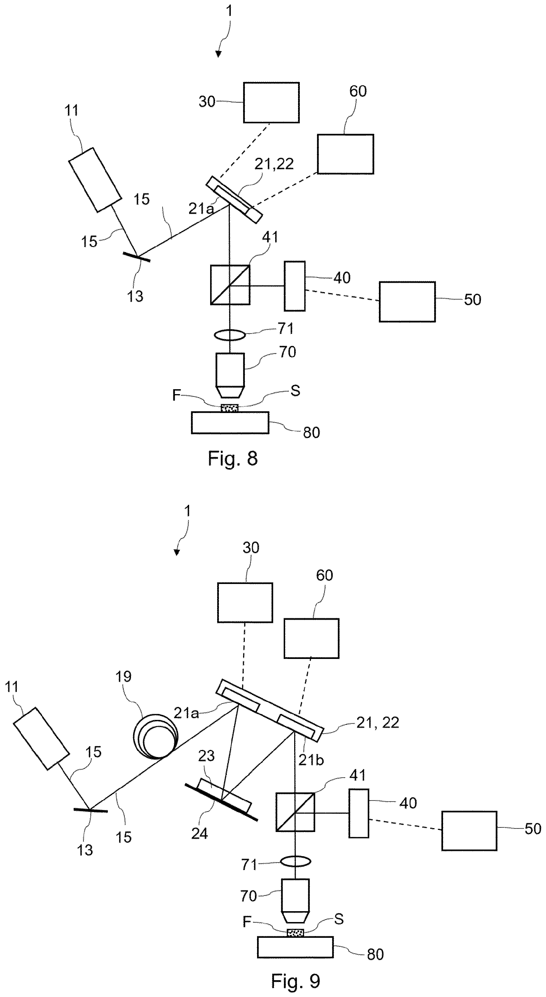

**Fig. 8** depicts a further embodiment of the light microscopy device 1 according to the invention which comprises an optical modulation system 20 based on a phase-modulating wavefront modulator 21, namely a spatial light modulator 22 with an active area 21a.

The first impeding light beam 15 is linearly polarized (using a polarization filter not shown in Fig. 8), and the polarization direction is particularly adjusted to match the arrangement of the spatial light modulator 22. When the first impeding light beam 15 is diffracted by the spatial light modulator 22, a phase pattern is introduced to the first impeding light beam 15, which results in an intensity distribution D with a local minimum M around the focus. To obtain a control measurement for background correction, the phase pattern is then altered by adjusting the spatial light modulator 22 by the control device 30 to provide additional impeding light I in the area A around the local minimum M, and the light intensity $I_I$ of the additional impeding light I is optionally tuned by the adjusting means 60, which is operationally coupled to the spatial light modulator 22.

**Fig. 9** shows a setup which can be used to generate an intensity distribution D with a small local minimum in three dimensions, e.g., in so-called 3D-STED microscopy. Here, a double-diffractive optical fiber 19 is provided in a beam path 2 of the light microscopy device 1 to retard a first component of the impeding light I with a first polarization direction with respect to a second component of the impeding light I with a second polarization direction which is perpendicular to the first polarization direction by a distance which is greater than the coherence length of the impeding light I. Therefore, two overlayed incoherent light beams of transversal polarization directions are generated.

A first phase pattern is introduced only to the first component by diffracting the first impeding light beam 15 on a first active area 21a of a spatial light modulator 22. The diffracted light beam is then passed through a second polarization modifying element 23, particularly a quarter wave plate or an electro optical modulator, which is arranged adjacent to a mirror surface 24. The first impeding light beam 15 is reflected on the mirror surface 24, and therefore passes the second polarization modifying element 23 twice, such that the polarization of the first impeding light beam is turned by 90°. Subsequently, the reflected light beam is diffracted on a second active area 21b of the spatial light modulator 22, which generates a further phase pattern in the first impeding light beam 15. The second active area 21b is oriented such that only the second component, but not the first component of the first impeding light beam 15 is phase modulated by the second active area 21b. The resulting first impeding light beam 15 carries two phase patterns on two incoherent and orthogonally polarized components. This leads to a desired three-dimensional intensity distribution D of the impeding light I at and around the focal plane. For example, a donut shape and a bottle beam shape may be combined in this manner to obtain an intensity distribution with a narrow minimum in all three dimensions. Of course, the same effect can be achieved by two separate spatial light modulators 22 instead of one spatial light modulator 22 with two active areas 21a, 21b.

According to the example shown if Fig. 9, the control device 30 and the adjusting means 60 are coupled to the spatial light modulator 22 to provide additional impeding light I at the local minimum M at the desired variable intensity $I_l$.

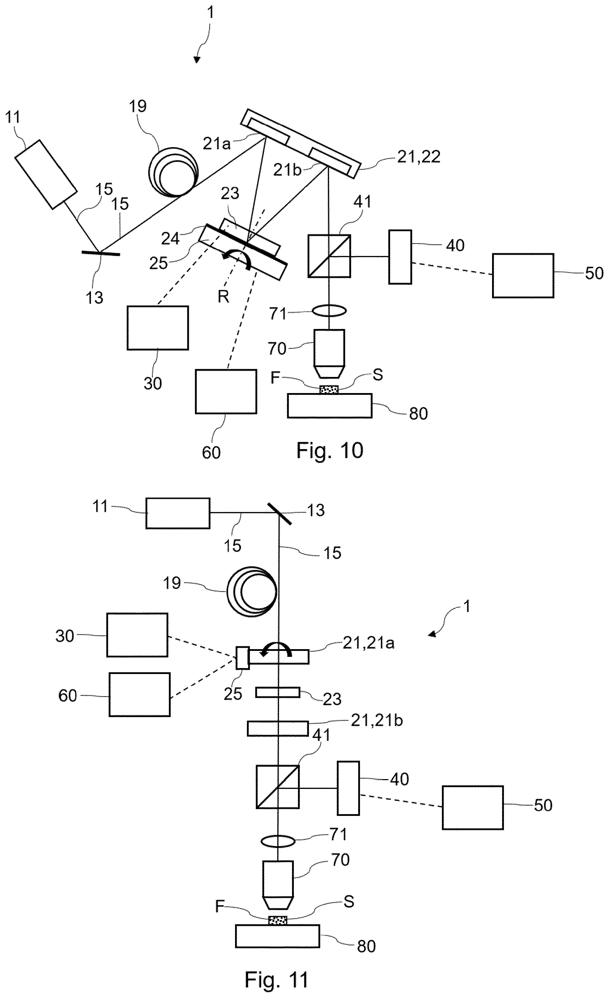

**Fig. 10** shows the same optical setup as Fig. 9, except that the second polarization modifying element 23 and the mirror surface 24 are coupled to a rotary actuator 25 which is configured to rotate the second polarization modifying element 23 around a rotation axis R to misalign the polarization direction of the first impeding light beam 15 in respect of the second active surface 21b, such that the phase pattern is introduced not only to the second component, but also to the first component by the second active surface 21b. Due to this mismatch, additional impeding light I is generated at the local minimum M. In particular, the control device 30 is coupled to the second polarization modifying element 23, which is particularly a switchable element, such as an electro optical modulator. The adjusting means 60 is optionally coupled to the rotary actuator 25 to adjust the angle of rotation, and therefore the intensity of the additional impeding light I.

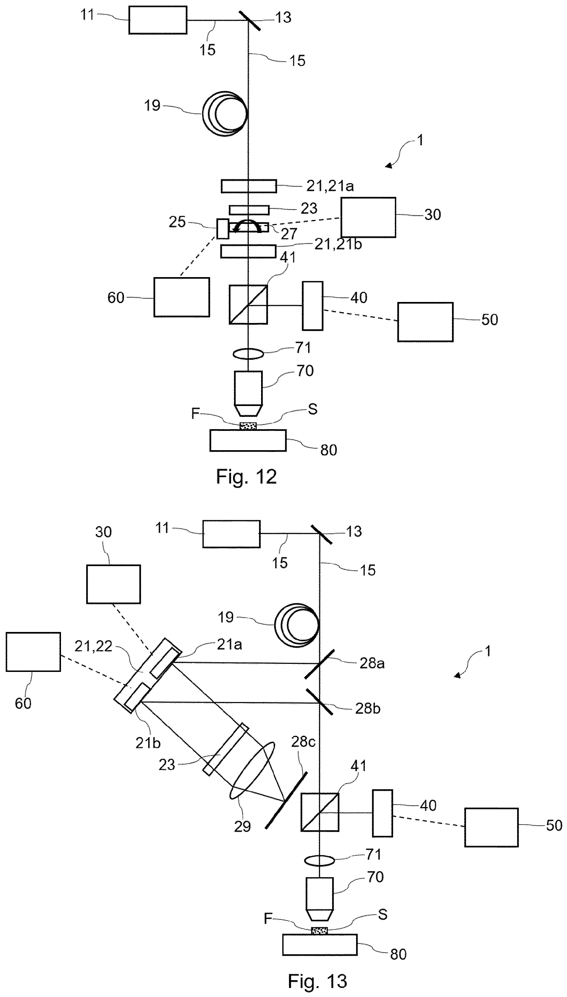

A similar effect is obtained by the setups shown in **Fig. 11 and 12.** Here, the spatial light modulator 22 is replaced by transmissive wave front modulators 21 (e.g., phase plates) in the beam path 2, between which a second polarization modifying element 23 is arranged. Thereby, a first phase pattern is generated in the first component of the first impeding light beam 15 by the first wave front modulator 21, the polarization is turned, and a second phase pattern is generated in the second component of the first impeding light beam 15 by the second wave front modulator 21.

According to the example of Fig. 11, to alter the phase pattern to generate additional impeding light I at the local minimum M, e.g., the first wave front modulator 21 may be coupled to a rotary actuator 25, the rotation of which is controlled by the control device 30, the angle optionally being controlled by the adjusting means 60.

In the alternative embodiment depicted in Fig. 12, two polarization modifying elements 23, 27 are provided between the first and the second wavefront modulator 21. The polarization modifying element 27 is switchable (the polarization modifying element 27 is particularly an electro optical modulator) and coupled to a rotary actuator 25. During measurement of the first fluorescence signal, the polarization modifying element 27 is inactive and therefore does not affect the polarization of the first impeding light beam 15. The polarization modifying element 23 turns the polarization direction by 90°. To obtain additional impeding light I for background correction, the polarization modifying element 27 can be switched on by the control device 30. By the adjusting means 60, the polarization modifying element 27 can be rotated by a desired angle to obtain a desired orientation with respect to the second wave front modulator 21, and the intensity of the additional impeding light I can be tuned. The advantage of this setup is the possibility to quickly switch the additional impeding light on an off.

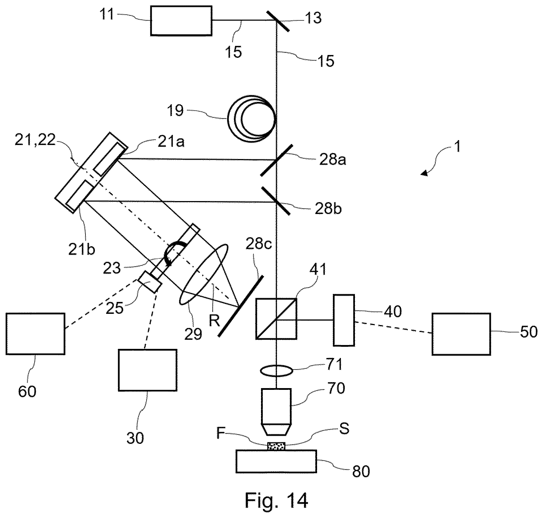

**Fig. 13 and 14** illustrate an alternative setup, by which two phase patterns may be introduced to the first impeding light beam 15, e.g., in 3D-STED microscopy. After passing a double-diffractive optical fiber 19, the first impeding light beam 15 is reflected by mirror 28a onto a first active area 21a of a spatial light modulator 22, and then passes a second polarization modifying element 23, e.g., a quarter wave plate, is focused by a lens 29 onto a further mirror 28c, which reflects the light beam back through the lens 29, the second polarization modifying element 23, and onto a second active area 21b of the spatial light modulator 22. The first active area 21a generates the first phase pattern in the first component of the first impeding light beam 15, and the second active area 21b generates the second phase pattern in the second component of the first impeding light beam 15. The first active area 21a and the second active area 21b are arranged in a holographic setup, such that the first active area 21a is imaged onto the second active area 21b. The resulting first impeding light beam 15 carrying both patterns is then coupled back into the beam path 2 by the mirror 28b.

According to the embodiment shown in Fig. 13, the spatial light modulator 22 is controlled by the control device 30 and optionally the adjusting means 60 to modify the phase patterns and obtain additional impeding light I at the local minimum M, particularly at a variable intensity.

In the embodiment of Fig. 14, a rotary actuator 25 is coupled to the second polarization modifying element 23. Switching of the rotary actuator 25 by the control device 30 and particularly controlling the angle of rotation by the adjusting means 60 functions as described above for the embodiment of Fig. 10.

**Fig. 15** shows a further embodiment of the light microscopy device 1 in a further configuration for generating two phase patterns to obtain a desired three-dimensional intensity distribution of the first impeding light beam 15 at and around the focus. The first impeding light beam 15 is passed through a double-diffractive optical fiber 19 as described above and is then split into a first partial impeding light beam 15a and a second partial impeding light beam 15b at a beam splitter 201. A first phase pattern is generated in the first partial impeding light beam 15a by a first spatial light modulator 22 having a first active area 21a and is then coupled into the beam path by mirrors 202 and 203. Likewise, a second phase pattern is generated in the second partial impeding light beam 15b, and the second partial impeding light beam is coupled into the beam path by mirrors 205 and 206. In the depicted example, the control device 30 and the adjusting means 60 are coupled to the first spatial light modulator 22 to alter the first phase pattern and generate additional impeding light I of a desired intensity, e.g., as described above. Alternatively, the second spatial light modulator 22 may be adjusted to alter the second phase pattern or both patterns could be altered to generate the additional impeding light I at the desired intensity.

**Fig. 16** shows a light microscopy device 1 according to the invention, which is similar to the one depicted in Fig. 1, wherein the optical modulation system 20 is a wavefront modulator 21 having an active area 21a configured to generate a phase pattern in the first impeding light beam 15. Further, a first polarization modifying element 90 is coupled to a rotary actuator 25, which in turn is controlled by the control device 30 and can be rotated by a variable small angle controlled by the adjusting means 60 to generate a mismatch between the phase pattern and the polarization introduced by the first polarization modifying element 90 and therefore generate additional impeding light I of a desired intensity. According to this embodiment, the active area 21a particularly generates a vortex-shaped phase-pattern, and the first polarization modifying element 90 particularly circularly polarizes the first impeding light beam 15, such that a donut shaped intensity distribution D is generated at and around the focus.

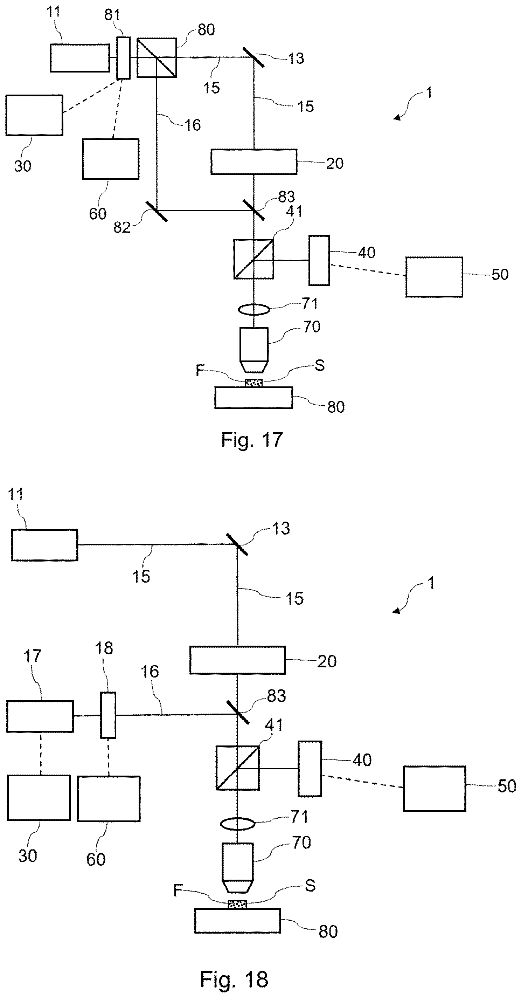

**Fig. 17** shows a light microscopy device 1 according to the invention comprising a fourth polarization modifying element 81 and a polarizing beam splitter 80 configured to split a selected fraction from the first impeding light beam 15 to generate a second impeding light beam 16, which is coupled into the beam path 2 of the objective 70 via mirrors 82 and 83 bypassing the optical modulation system 20, such that only the first impeding light beam 15, but not the second impeding light beam 16 is phase modulated. Therefore, in particular the second impeding light beam 16 generates an approximately Gaussian-shaped intensity distribution of impeding light I which is overlaid with the intensity distribution D comprising the local minimum M from the first impeding light beam 15 at the focus. By controlling the fourth polarization modifying element 81 via the control device 30, additional impeding light I may be generated at the local minimum M. In addition, by controlling the angle between the fourth polarization element 81 and the beam splitter 80, the intensity of the additional impeding light I can be adjusted controlled by the adjusting means 60.

**Fig. 18** shows a light microscopy device 1 according to the invention comprising a first impeding light source 11 for generating a first impeding light beam 15, and a second impeding light source 17 for generating a second impeding light beam 16 to generate additional impeding light I at the local minimum M of the intensity distribution. As in the embodiment shown in Fig. 17, the optical modulation system 20 is bypassed by the second impeding light beam 16. The second impeding light source 17 can be switched on an off by the control device 30, and the intensity of the second impeding light beam 16 can optionally be adjusted by an intensity modulator 18 which is coupled to the adjusting means 60.

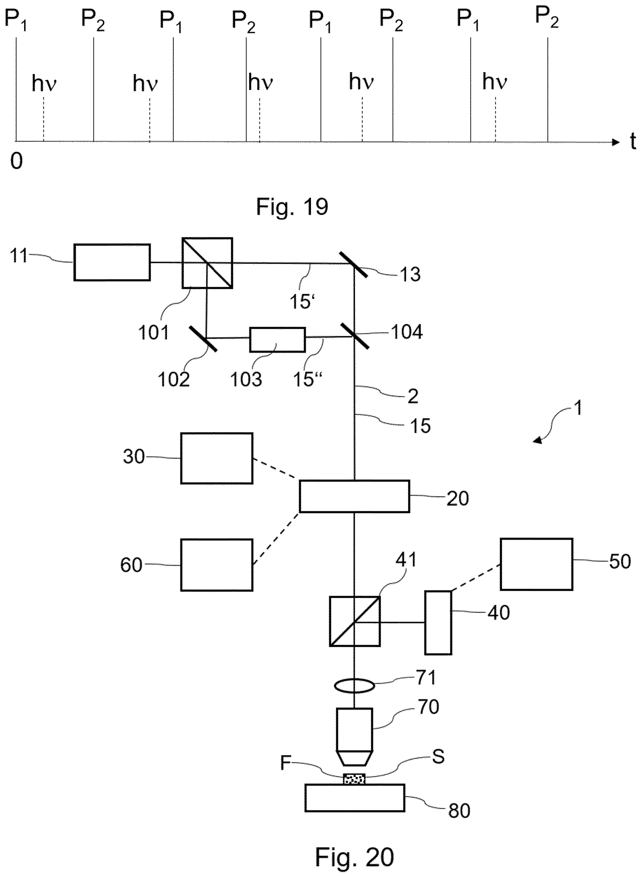

**Fig. 19** depicts a time series of interleaved first pulses $P_1$ and second pulses $P_2$ from a pulsed laser source capable of generating the impeding light I. Such pulses $P_1$, $P_2$ may be generated, e.g., by a first impeding light source 11 (a pulsed laser source) as depicted in Fig. 20 (explained below). The first pulses $P_1$ and the second pulses $P_2$ are generated at equal time intervals (e.g., in the order of about 10 ns between a first pulse $P_1$ and a second pulse $P_2$). Between the laser pulses $P_1$, $P_2$, photons hv emitted by a fluorescent dye molecule F in the sample S (see above) are detected by the detector 40. In particular, the depicted series of pulses $P_1$, $P_2$ occurs during pixel wise scanning and detection of the fluorescent signal, that is, the entire pulse series occurs during detection of the fluorescent signal as a single pixel at the detector 40. The time intervals between the pulses $P_1$, $P_2$ are therefore much smaller than the scanning speed of the sample S. To obtain the total fluorescence signal, the photons hv detected by the detector 40 during the pulse series are counted by a counting logic of the light microscopy device 1 and the number of counted photons hv relates to the detected signal intensity.

In particular, according to the invention, during the second pulses $P_2$, the additional impeding light I is generated at and around the local minimum M of the intensity distribution D, but during the first pulses $P_1$, the additional impeding light I is not present at and around the local minimum M. This advantageously allows to perform background correction in an interleaved manner, resulting in a high accuracy of the correction, since temporal effects (e.g., photobleaching, sample drift) are even less relevant than in pixel-for-pixel measurement of the signal of interest (first fluorescence signal) and the background (second fluorescence signal).

According to one alternative of the method, two separate counters, which are appropriately coordinated with the system clock can be used to count the photons detected after a first pulse $P_1$ and the photons detected after a second pulse $P_2$. After accumulation, the two signals can be subtracted from each other to obtain the background corrected signal.

According to another alternative, a single counter may be used which alternately counts up and down. This counter may count up in the time intervals after a first pulse $P_1$ and down in the time intervals after a second pulse $P_2$, such that background correction is already performed during the accumulation of the fluorescence signal. This is due to the fact that the sum of all photons detected after a second pulse $P_2$ subtracted from the sum of all photons detected after a first pulse $P_1$ is the same as the sum obtained by alternately adding and subtracting the detected photons.

**Fig. 20** shows an optical setup that can be used to generate alternating first pulses $P_1$ and second pulses $P_2$. The shown light microscopy device 1 is set up analogously as the light microscopy device 1 shown in Fig. 1, wherein the first impeding light source 11 is a pulsed laser source, and the setup comprises an additional beam splitter 101 that splits the first impeding light beam 15 generated by the pulsed impeding light source 11 into a first branch 15' and a second branch 15". The first branch 15' generates the first pulses $P_1$ (see Fig. 19), which are coupled into the beam path 2 via the mirror 13. The second branch 15" contains a mirror 102 and a pulse delaying element 103, which generates a temporal delay of the pulses traveling on the second branch 15" with respect to the pulses traveling on the first branch 15'. Therefore, the second branch 15" generates the second pulses $P_2$ which are interleaved with the first pulses $P_1$, and the second pulses $P_2$ are coupled into the beam path 2 by the mirror 104.

Of course, alternatively, two separate laser sources which are appropriately timed may be used instead of the setup shown in Fig. 20 to generate the interleaved first pulses $P_1$ and second pulses $P_2$.

As described above, the additional impeding light I at and around the local minimum M of the intensity distribution D is generated during the second pulses $P_2$, but not during the first pulses $P_1$. This may be achieved by the setup shown in Fig. 20, e.g., by appropriate switching of the optical modulation system 20, such that, e.g., the phase pattern or amplitude pattern introduced to the first impeding light beam 15 is changed during the second pulses $P_2$ compared to the first pulses $P_1$. Alternatively, the second branch 15" shown in Fig. 20 or the light generated by an additional pulsed laser source may be coupled into the beam path 2 between the optical modulation system 20 and the objective 70, such as, e.g., depicted for the second impeding light beam 16 in Fig. 17 and 18, such that the optical modulation system 20 modulates only the first pulses $P_1$, but not the second pulses $P_2$.

**List of reference signs**

| | |
|---|---|
| 1 | Light microscopy device |
| 2 | Beam path |
| 10 | Excitation light source |
| 11 | First impeding light source |
| 12 | Beam splitter |
| 13 | Mirror |
| 14 | Excitation light beam |
| 15 | First impeding light beam |
| 15a | First partial impeding light beam |
| 15b | Second partial impeding light beam |
| 15' | First branch |
| 15" | Second branch |
| 16 | Second impeding light beam |
| 17 | Second impeding light source |
| 18 | Intensity modulator |
| 19 | Double-diffractive optical fiber |
| 20 | Optical modulation system |
| 21 | Wavefront modulator |
| 21a | First active area |
| 21b | Second active area |
| 22 | Spatial light modulator |
| 23 | Second polarization modifying element |
| 24 | Mirror surface |
| 25 | Rotary actuator |
| 27 | Polarization modifying element |
| 28a-c | Mirror |
| 29 | Lens |
| 30 | Control device |
| 40 | Detector |
| 41 | Beam splitter |
| 50 | Computation device |
| 60 | Adjusting means |
| 70 | Objective |
| 71 | Tube lens |
| 80 | Beam splitter |
| 81 | Fourth polarization modifying element |
| 82 | Mirror |
| 83 | Mirror |
| 90 | First polarization modifying element |
| 100 | Sample stage |
| 101 | Beam splitter |
| 102 | Mirror |
| 103 | Pulse delaying element |

| 104 | Mirror |
| 201 | Beam splitter |
| 202 | Mirror |
| 203 | Mirror |
| 204 | Mirror |
| 205 | Mirror |
| 206 | Mirror |
| 210 | Array |
| 211 | Micromirror |
| 212 | Hinge |
| 213 | Substrate |
| 214 | Beam dump |
| A | Area |
| $A_1$ | First area |
| $A_2$ | Second area |
| C | Constant phase value |
| D | Distribution |
| F | Fluorescent dye molecule |
| I | Impeding light |
| M | Local minimum |
| $P_1$ | First pulse |
| $P_2$ | Second pulse |
| S | Sample |

**Claims**

1. A light microscopy method, comprising

   a. illuminating a sample (S) comprising fluorescent dye molecules (F) by an excitation light beam (14) comprising excitation light capable of exciting the fluorescent dye molecules (F),
   b. illuminating the sample (S) by a first impeding light beam (15) comprising impeding light (I) capable of impeding the fluorescence of the fluorescent dye molecules (F), particularly by inducing stimulated emission depletion of the fluorescent dye molecules (F),
   c. generating an intensity distribution (D) of the impeding light (I) with at least one local minimum (M),
   d. providing additional impeding light (I) in an area (A) overlapping with the local minimum (M),
   e. obtaining a first fluorescence signal from the area (A) overlapping with the local minimum (M) in the absence of the additional impeding light (I), and obtaining a second fluorescence signal from the area (A) overlapping with the local minimum (M) in the presence of the additional impeding light (I), and
   f. correcting the first fluorescence signal by the second fluorescence signal, **characterized in that**
   at each point of the intensity distribution (D) at which the impeding light (I) has a light intensity ($I_I$) greater than a saturation intensity, $I_{sat}$, of the impeding light (I), the light intensity ($I_I$) of the impeding light (I) differs by 20 % or less, between the intensity distribution (D) in the presence of the additional impeding light (I) and the intensity distribution (D) in the absence of the additional impeding light (I), wherein the intensity distribution (D) of the impeding light (I) comprises the local minimum (M) both in the presence of the additional impeding light (I) and in the absence of the additional impeding light (I).

2. The method according to claim 1, wherein the method comprises adjusting a light intensity ($I_I$) of the additional impeding light (I) by a variable amount independently of adjusting a power of the first impeding light beam (15), wherein particularly an amplitude distribution, a polarization or a phase distribution of the impeding light (I) is modified by a variable amount to adjust the light intensity ($I_I$) of the additional impeding light (I) by the variable amount, wherein more particularly said adjusting the light intensity ($I_I$) of the additional impeding light (I) by the variable amount comprises selecting a light intensity value from at least two different discrete light intensity values above zero or from a continuous range of light intensity values and setting the light intensity of the additional impeding light (I) to the selected value, particularly gradually or in a stepwise manner.

3. The method according to claim 1 or 2, wherein the light intensity ($I_I$) of the additional impeding light (I) at the local minimum (M) is 20 % or less, particularly 10 % or less, more particularly 5 % or less, of a maximum light intensity ($I_I$) of the impeding light (I), wherein the maximum light intensity refers to the impeding light (I) in the absence of the additional impeding light (I).

4. The method according to one of the preceding claims, wherein the method further comprises modulating a wavefront of the impeding light (I), such that a phase pattern and/or amplitude pattern of the impeding light (I) is generated in a back aperture of an objective (70) through which the sample (S) is illuminated by the impeding light (I), particularly by a wave front modulator (21) comprising an active area (21a, 21b) arranged in a pupil plane or intersecting a pupil plane of the objective (70), more particularly wherein the method further comprises modifying the phase distribution or amplitude distribution by a variable amount by adjusting the wave front modulator (21) to adjust the light intensity ($I_I$) of the additional impeding light (I) by the variable amount.

5. The method according to claim 4, wherein the method comprises modulating the wavefront of the impeding light (I) by an array (210) of tiltable micromirrors (211), such that an amplitude distribution of the impeding light (I) is generated in the back aperture of the objective (70) and modifying the amplitude pattern to provide the additional impeding light (I) in the area (A) overlapping with the local minimum (M) by tilting a subset of the micromirrors (211), wherein particularly the amplitude pattern is modified by a variable amount ) by tilting a subset of the micromirrors (211) to adjust the light intensity ($I_I$) of the additional impeding light (I) by the variable amount.

6. The method according to claim 4, wherein the wavefront of the impeding light (I) is modulated such that a vortex-shaped phase pattern of the impeding light (I) is obtained at the back aperture of the objective (70), wherein the vortex-shaped phase pattern comprises a phase increasing from zero to a maximum value, particularly $2\pi$, in a circumferential direction in respect of an optical axis of the first impeding light beam (15), wherein the method further comprises circularly polarizing the first impeding light beam (15) after obtaining the vortex-shaped phase pattern, and wherein the method further comprises modifying the phase pattern to provide the additional impeding light (I) in the area (A) overlapping with the local minimum, wherein particularly the phase pattern is modified by a variable amount to adjust the light intensity ($I_I$) of the additional impeding light (I), wherein particularly the phase pattern is modified by

   a. overlaying a ring or circular shaped phase pattern having a constant phase with the vortex-shaped phase pattern to generate the additional impeding light (I) in the area (A) overlapping with the local minimum (M), more particularly wherein the method further comprises controlling an area of the ring or circular shaped pattern, even more particularly to adjust the light intensity ($I_I$) of the additional impeding light (I) by the variable amount, or
   b. modifying the maximum value of the phase pattern, particularly to adjust the light intensity ($I_I$) of the additional impeding light (I) by the variable amount.

7. The method according to claim 4, wherein the wavefront of the impeding light (I) is modulated such that a phase pattern comprising a first area ($A_1$) comprising a constant first phase and a second area ($A_2$) comprising a constant second phase, which differs from the first phase, particularly by a difference of $\pi$, is generated, wherein the first area ($A_1$) and the second area ($A_2$) each extend perpendicular to an optical axis of the first impeding light beam (15), and wherein the method further comprises adjusting the first phase and/or the second phase or adjusting the size of the first area ($A_1$) and/or the second area ($A_2$) to provide the additional impeding light (I) in the area (A) overlapping with the local minimum (M), particularly to adjust the light intensity of the additional impeding light (I) by the variable amount, wherein particularly

   a. the first area (A1) and the second area ($A_2$) are separated along a line which extends perpendicular to the optical axis, or
   b. the first area ($A_1$) is circular, and the second area ($A_2$) is shaped as a circular ring around the first area ($A_1$).

8. The method according to one of the claims 4 to 7, wherein the method further comprises modifying a phase pattern of the impeding light (I) by a first polarization modifying element (90) and rotating the first polarization modifying element (90) around an optical axis of the first impeding light beam (15) by a variable angle smaller than 45° to provide the additional impeding light (I) in the area (A) overlapping the local minimum (M), particularly to adjust the light intensity of the additional impeding light (I) by the variable amount.

9. The method according to one of the claims 4 to 8, wherein the method further comprises generating a phase pattern of the first impeding light beam (15) by a first active area (21a) of a wave front modulator (21), subsequently rotating the polarization direction of the impeding light (I) by an angle by means of a second polarization modifying element (23), subsequently further modulating the first impeding light beam (15) by a second active area (21b) of a polarization-sensitive wave front modulator (21), wherein the angle is adjusted to provide additional impeding light (I) in the area (A) overlapping the local minimum (M), wherein particularly the method comprises adjusting the angle by a variable amount to adjust the light intensity ($I_I$) of the additional impeding light (I) by the variable amount, particularly wherein the method further comprises generating the phase pattern in the impeding light (1) by the first active area (21a) in a first polarization direction and generating a further phase pattern in the impeding light (I) by the second active area (21b) in a second polarization direction perpendicular to the first polarization direction.

10. The method according to any one of the preceding claims, wherein the method further comprises illuminating the sample (S) in the area (A) overlapping with the local minimum (M) by a second impeding light beam (16) capable of impeding the fluorescence of the fluorescent dye molecules (F) to provide the additional impeding light (I) in the area (A) overlapping the local minimum (M), wherein particularly the method further comprises controlling the intensity of the second impeding light beam (16) to adjust the light intensity ($I_I$) of the additional impeding light (I) by the variable amount, wherein particularly the method further comprises

a. generating the second impeding light beam (16) by splitting impeding light (I) from the first impeding light beam (15) prior to generating the intensity distribution (D) comprising the at least one local minimum (M), or

b. generating the first impeding light beam (15) by a first impeding light source (11) and generating the second impeding light beam (16) by a second impeding light source (17).

11. The method according to any one of the preceding claims, wherein the method comprises generating a series of first pulses ($P_1$) and a series of second pulses ($P_2$) of the impeding light (I), wherein the first pulses ($P_1$) are interleaved with the second pulses ($P_2$), and wherein the additional impeding light (I) is provided during the second pulses ($P_2$).

12. A light microscopy device (1) for executing the method according to one of the claims 1-11, wherein the light microscopy device (1) comprises

   a. at least one light source (10, 11) for generating an excitation light beam (14) and a first impeding light beam (15) for illuminating a sample (S) comprising fluorescent dye molecules (F), wherein the excitation light beam (14) comprises excitation light capable of exciting the fluorescent dye molecules (F) and the first impeding light beam (15) comprises impeding light (I) capable of impeding the fluorescence of the fluorescent dye molecules (F),

   b. an optical modulation system (20) for generating an intensity distribution (D) of the impeding light (I) with at least one local minimum (M),

   c. a control device (30) configured to control the light microscopy device (1), such that additional impeding light (I) is generated in an area (A) overlapping with the local minimum (M),

   d. a detector (40) for obtaining a fluorescence signal (S) from the illuminated sample (S),

   e. a computation device (50) configured to correct a first fluorescence signal obtained by the detector (40) from the area (A) overlapping with the local minimum (M) in the absence of the additional impeding light (I) by a second fluorescence signal obtained by the detector (40) from the area (A) overlapping with the local minimum (M) in the presence of the additional impeding light (I), **characterized in that**
   the optical modulation system (20) and the control device (30) are configured such that at each point of the intensity distribution (D) at which the impeding light (I) has a light intensity ($I_I$) greater than a saturation intensity of the impeding light (I), the light intensity ($I_I$) of the impeding light (I) differs by 20 % or less, between the intensity distribution (D) in the presence of the additional impeding light (I) and the intensity distribution (D) in the absence of the additional impeding light (I) and such that the intensity distribution (D) of the impeding light (I) comprises the local minimum (M) both in the presence of the additional impeding light (I) and in the absence of the additional impeding light (I).

13. The light microscopy device (1) according to claim 12, **characterized in that** the light microscopy device (1) comprises an adjusting means (60) configured to adjust a light intensity ($I_I$) of the additional impeding light (I) by a variable amount independently of adjusting a power of the first impeding light beam (15).

14. The light microscopy device (1) according to claim 12 or 13, **characterized in that** the light microscopy device (1) comprises an objective (70) configured to illuminate the sample (S) with the impeding light (I), and the optical modulation system (20) comprises a wave front modulator (21) configured to modulate a wavefront of the impeding light (I), such that a phase pattern and/or amplitude pattern of the impeding light (I) is generated in a back aperture of the objective (70), wherein the control device (30) is configured to modify the phase pattern and/or the amplitude pattern to provide the additional impeding light (I) in the area (A) overlapping the local minimum (M), particularly wherein the adjusting means (60) is configured to adjust the wave front modulator (21) to modify the phase pattern and/or the amplitude pattern by a variable amount to adjust the light intensity of the additional impeding light (I) by the variable amount.

15. The light microscopy device (1) according to one of the claims 12 to 14, **characterized in that**

   a. the light microscopy device (1) comprises a beam splitter (80) configured to split impeding light (I) from the first impeding light beam (15) to generate a second impeding light beam (16) before the intensity distribution (D) is generated by the optical modulation system (20), wherein the control device (30) is configured to control the light microscopy device (1), such that the second impeding light beam (16) illuminates the sample (S) to provide the additional impeding light (I) in the area (A) overlapping the local minimum (M), wherein particularly the adjusting means (60) is configured to adjust the amount of light split from the first impeding light beam (15) by the beam splitter (80) for controlling the intensity of the second impeding light beam (16) to adjust the light intensity ($I_I$) of the additional impeding light (I) by the variable amount, or

   b. the light microscopy device (1) comprises a first impeding light source (11) configured to generate the first impeding light beam (15) and a second impeding light source (17) configured to generate a second impeding light beam (16) for generating the additional impeding light (I), wherein the control device (30) is configured to adjust the light microscopy device (1), such that the second impeding light beam (16) illuminates the sample (S) to provide the additional impeding light (I) in the area (A) overlapping the local minimum (M), wherein particularly the light microscopy device (1) comprises an intensity modulator (18) configured to control a light intensity of the second impeding light beam (17), wherein the adjusting means (60) is configured to control the intensity modulator (18) to control the light intensity of the second impeding light beam (17) by the variable amount.

## Patentansprüche

1. Lichtmikroskopisches Verfahren, umfassend

   a. Beleuchten einer Probe (S), die fluoreszierende Farbstoffmoleküle (F) aufweist, mit einem Anregungslichtstrahl (14), der Anregungslicht aufweist, das die fluoreszierenden Farbstoffmoleküle (F) anregen kann,
   b. Beleuchten der Probe (S) mit einem ersten Verhinderungslichtstrahl (15), der Verhinderungslicht (I) aufweist, das die Fluoreszenz der fluoreszierenden Farbstoffmoleküle (F) beeinträchtigen kann, insbesondere durch Induktion einer stimulierten Emissionsdepletion der fluoreszierenden Farbstoffmoleküle (F),
   c. Erzeugen einer Intensitätsverteilung (D) des Verhinderungslichts (I) mit mindestens einem lokalen Minimum (M),
   d. Bereitstellen von zusätzlichem Verhinderungslicht (I) in einem Bereich (A), der sich mit dem lokalen Minimum (M) überschneidet,
   e. Erhalten eines ersten Fluoreszenzsignals aus dem Bereich (A), der sich mit dem lokalen Minimum (M) überschneidet, in Abwesenheit des zusätzlichen Verhinderungslichts (I) und Erhalten eines zweiten Fluoreszenzsignals aus dem Bereich (A), der sich mit dem lokalen Minimum (M) überschneidet, in Gegenwart des zusätzlichen Verhinderungslichts (I), und
   f. Korrigieren des ersten Fluoreszenzsignals durch das zweite Fluoreszenzsignal, **dadurch gekennzeichnet, dass**
   an jedem Punkt der Intensitätsverteilung (D), an dem das Verhinderungslicht (I) eine Lichtintensität ($I_I$) aufweist, die größer ist als eine Sättigungsintensität, $I_{sat}$, des Verhinderungslichts (I), die Lichtintensität ($I_I$) des Verhinderungslichts (I) um 20 % oder weniger zwischen der Intensitätsverteilung (D) in Anwesenheit des zusätzlichen Verhinderungslichts (I) und der Intensitätsverteilung (D) in Abwesenheit des zusätzlichen Verhinderungslichts (I) abweicht, wobei die Intensitätsverteilung (D) des Verhinderungslichts (I) das lokale Minimum (M) sowohl in Anwesenheit des zusätzlichen Verhinderungslichts (I) als auch in Abwesenheit des zusätzlichen Verhinderungslichts (I) umfasst.

2. Verfahren nach Anspruch 1, wobei das Verfahren das Einstellen einer Lichtintensität ($I_I$) des zusätzlichen Verhinderungslichts (I) um einen variablen Betrag unabhängig vom Einstellen einer Leistung des ersten Verhinderungslichtstrahls (15) umfasst, wobei insbesondere eine Amplitudenverteilung, eine Polarisation oder eine Phasenverteilung des Verhinderungslichts (I) um einen variablen Betrag verändert wird, um die Lichtintensität ($I_I$) des zusätzlichen Verhinderungslichts (I) um den variablen Betrag einzustellen, wobei weiter insbesondere das Einstellen der Lichtintensität ($I_I$) des zusätzlichen Verhinderungslichts (I) um den variablen Betrag das Auswählen eines Lichtintensitätswerts aus mindestens zwei verschiedenen diskreten Lichtintensitätswerten über Null oder aus einem kontinuierlichen Bereich von Lichtintensitätswerten und das Einstellen der Lichtintensität des zusätzlichen Verhinderungslichts (I) auf den ausgewählten Wert, insbesondere graduell oder schrittweise, umfasst.

3. Verfahren nach Anspruch 1 oder 2, wobei die Lichtintensität ($I_I$) des zusätzlichen Verhinderungslichts (I) an dem lokalen Minimum (M) 20 % oder weniger, insbesondere 10 % oder weniger, insbesondere 5 % oder weniger, einer maximalen Lichtintensität ($I_I$) des Verhinderungslichts (I) beträgt, wobei sich die maximale Lichtintensität auf das Verhinderungslicht (I) in Abwesenheit des zusätzlichen Verhinderungslichts (I) bezieht.

4. Verfahren nach einem der vorhergehenden Ansprüche, wobei das Verfahren weiterhin das Modulieren einer Wellenfront des Verhinderungslichts (I) umfasst, so dass ein Phasenmuster und/oder Amplitudenmuster des Verhinderungslichts (I) in einer Rückapertur eines Objektivs (70), durch das die Probe (S) mit dem Verhinderungslicht (I) beleuchtet wird, erzeugt wird, insbesondere durch einen Wellenfrontmodulator (21), der eine aktive Fläche (21a, 21b) umfasst, die in einer Pupillenebene angeordnet ist oder eine Pupillenebene des Objektivs (70) schneidet, insbesondere wobei das Verfahren weiterhin das Modifizieren der Phasenverteilung oder der Amplitudenverteilung um einen variablen Betrag durch Einstellen des Wellenfrontmodulators (21) umfasst, um die Lichtintensität ($I_I$) des zusätzlichen Verhinderungslichts (I) um den variablen Betrag einzustellen.

5. Verfahren nach Anspruch 4, wobei das Verfahren das Modulieren der Wellenfront des Verhinderungslichts (I) durch eine Anordnung (210) von kippbaren Mikrospiegeln (211), so dass eine Amplitudenverteilung des Verhinderungslichts (I) in der Rückapertur des Objektivs (70) erzeugt wird, und das Modifizieren des Amplitudenmusters umfasst, um das zusätzliche Verhinderungslicht (I) in dem Bereich (A) bereitzustellen, der sich mit dem lokalen Minimum (M) überschneidet, durch Kippen einer Teilmenge der Mikrospiegel (211), wobei insbesondere das Amplitudenmuster durch Kippen einer Teilmenge der Mikrospiegel (211) um einen variablen Betrag modifiziert wird, um die Lichtintensität ($I_l$) des zusätzlichen Verhinderungslichts (I) um den variablen Betrag anzupassen.

6. Verfahren nach Anspruch 4, wobei die Wellenfront des Verhinderungslichts (I) so moduliert wird, dass ein vortexförmiges Phasenmuster des Verhinderungslichts (I) in der Rückapertur des Objektivs (70) erhalten wird, wobei das vortexförmige Phasenmuster eine von Null auf einen Maximalwert, insbesondere $2\pi$, in einer Umfangsrichtung in Bezug auf eine optische Achse des ersten Verhinderungslichtstrahls (15) ansteigende Phase umfasst, wobei das Verfahren weiterhin das zirkulare Polarisieren des ersten Verhinderungslichtstrahls (15) nach Erhalt des vortexförmigen Phasenmusters umfasst, und wobei das Verfahren weiterhin das Modifizieren des Phasenmusters umfasst, um das zusätzliche Verhinderungslicht (I) in dem Bereich (A) bereitzustellen, der sich mit dem lokalen Minimum überschneidet, wobei insbesondere das Phasenmuster um einen variablen Betrag modifiziert wird, um die Lichtintensität ($I_l$) des zusätzlichen Verhinderungslichts (I) einzustellen, wobei insbesondere das Phasenmuster modifiziert wird durch

a. Überlagern eines ring- oder kreisförmigen Phasenmusters mit einer konstanten Phase mit dem vortexförmigen Phasenmuster, um das zusätzliche Verhinderungslicht (I) in dem Bereich (A) zu erzeugen, der sich mit dem lokalen Minimum (M) überschneidet, weiter insbesondere wobei das Verfahren weiterhin das Steuern einer Fläche des ring- oder kreisförmigen Musters umfasst, noch weiter insbesondere, um die Lichtintensität ($I_l$) des zusätzlichen Verhinderungslichts (I) um den variablen Betrag anzupassen, oder
b. Änderung des Maximalwerts des Phasenmusters, insbesondere zur Anpassung der Lichtintensität ($I_l$) des zusätzlichen Verhinderungslichts (I) um den variablen Betrag.

7. Verfahren nach Anspruch 4, wobei die Wellenfront des Verhinderungslichts (I) derart moduliert wird, dass ein Phasenmuster mit einem ersten Bereich ($A_1$) mit einer konstanten ersten Phase und einem zweiten Bereich ($A_2$) mit einer konstanten zweiten Phase, die sich von der ersten Phase, insbesondere um eine Differenz von $\pi$, unterscheidet, erzeugt wird, wobei der erste Bereich ($A_1$) und der zweite Bereich ($A_2$) jeweils senkrecht zu einer optischen Achse des ersten Verhinderungslichtstrahls (15) verlaufen, und wobei das Verfahren ferner das Einstellen der ersten Phase und/oder der zweiten Phase oder das Einstellen der Größe der ersten Fläche ($A_1$) und/oder der zweiten Fläche ($A_2$) umfasst, um das zusätzliche Verhinderungslicht (I) in dem sich mit dem lokalen Minimum (M) überschneidenden Bereich (A) bereitzustellen, insbesondere um die Lichtintensität des zusätzlichen Verhinderungslichts (I) um den variablen Betrag einzustellen, wobei insbesondere

a. der erste Bereich (A1) und der zweite Bereich ($A_2$) entlang einer Linie getrennt sind, die senkrecht zu der optischen Achse verläuft, oder
b. die erste Fläche ($A_1$) kreisförmig ist, und die zweite Fläche ($A_2$) die Form eines kreisförmigen Rings um die erste Fläche ($A_1$) hat.

8. Verfahren nach einem der Ansprüche 4 bis 7, wobei das Verfahren ferner das Modifizieren eines Phasenmusters des Verhinderungslichts (I) durch ein erstes Polarisationsmodifizierungselement (90) und das Drehen des ersten Polarisationsmodifizierungselements (90) um eine optische Achse des ersten Verhinderungslichtstrahls (15) um einen variablen Winkel kleiner als 45° umfasst, um das zusätzliche Verhinderungslicht (I) in dem Bereich (A) bereitzustellen, der sich mit dem lokalen Minimum (M) überschneidet, insbesondere um die Lichtintensität des zusätzlichen Verhinderungslichts (I) um den variablen Betrag anzupassen.

9. Verfahren nach einem der Ansprüche 4 bis 8, wobei das Verfahren weiterhin umfasst: ein Erzeugen eines Phasenmusters des ersten Verhinderungslichtstrahls (15) durch eine erste aktive Fläche (21a) eines Wellenfrontmodulators (21), ein anschließendes Drehen der Polarisationsrichtung des Verhinderungslichts (I) um einen Winkel mittels eines zweiten Polarisationsmodifizierungselements (23), ein anschließendes weiteres Modulieren des ersten Verhinderungslichtstrahls (15) durch eine zweite aktive Fläche (21b) eines polarisationsempfindlichen Wellenfrontmodulators (21), wobei der Winkel so eingestellt wird, dass zusätzliches Verhinderungslicht (I) in dem sich mit dem lokalen Minimum (M) überschneidenden Bereich (A) entsteht, wobei insbesondere das Verfahren das Einstellen des Winkels um einen variablen Betrag umfasst, um

die Lichtintensität ($I_l$) des zusätzlichen Verhinderungslichts (I) um den variablen Betrag einzustellen, wobei insbesondere das Verfahren weiterhin das Erzeugen des Phasenmusters in dem Verhinderungslicht (I) durch die erste aktive Fläche (21a) in einer ersten Polarisationsrichtung und das Erzeugen eines weiteren Phasenmusters in dem Verhinderungslicht (I) durch die zweite aktive Fläche (21b) in einer zweiten Polarisationsrichtung senkrecht zu der ersten Polarisationsrichtung umfasst.

10. Verfahren nach einem der vorhergehenden Ansprüche, wobei das Verfahren weiterhin ein Beleuchten der Probe (S) in dem Bereich (A), der sich mit dem lokalen Minimum (M) überschneidet, mit einem zweiten Verhinderungslichtstrahl (16) umfasst, der die Fluoreszenz der Fluoreszenzfarbstoffmoleküle (F) beeinträchtigen kann, um das zusätzliche Verhinderungslicht (I) in dem Bereich (A), der sich mit dem lokalen Minimum (M) überschneidet, bereitzustellen, wobei insbesondere das Verfahren ein Steuern der Intensität des zweiten Verhinderungslichtstrahls (16) umfasst, um die Lichtintensität ($I_l$) des zusätzlichen Verhinderungslichts (I) um den variablen Betrag einzustellen, wobei das Verfahren insbesondere ferner umfasst:

a. ein Erzeugen des zweiten Verhinderungslichtstrahls (16) durch Aufspalten von Verhinderungslicht (I) aus dem ersten Verhinderungslichtstrahl (15) vor der Erzeugung der Intensitätsverteilung (D) mit dem mindestens einen lokalen Minimum (M), oder
b. ein Erzeugen des ersten Verhinderungslichtstrahls (15) durch eine erste Verhinderungslichtquelle (11) und ein Erzeugen des zweiten Verhinderungslichtstrahls (16) durch eine zweite Verhinderungslichtquelle (17).

11. Verfahren nach einem der vorhergehenden Ansprüche, wobei das Verfahren das Erzeugen einer Reihe von ersten Pulsen ($P_1$) und einer Reihe von zweiten Pulsen ($P_2$) des Verhinderungslichts (I) umfasst, wobei die ersten Pulse ($P_1$) mit den zweiten Pulsen ($P_2$) verschachtelt sind, und wobei das zusätzliche Verhinderungslicht (I) während der zweiten Pulse ($P_2$) bereitgestellt wird.

12. Lichtmikroskopievorrichtung (1) zur Durchführung des Verfahrens nach einem der Ansprüche 1-11, wobei die Lichtmikroskopievorrichtung (1) umfasst

a. mindestens eine Lichtquelle (10, 11) zum Erzeugen eines Anregungslichtstrahls (14) und eines ersten Verhinderungslichtstrahls (15) zum Beleuchten einer Probe (S), die Fluoreszenzfarbstoffmoleküle (F) umfasst, wobei der Anregungslichtstrahl (14) Anregungslicht aufweist, das die Fluoreszenzfarbstoffmoleküle (F) anregen kann, und der erste Verhinderungslichtstrahl (15) Verhinderungslicht (I) aufweist, das die Fluoreszenz der Fluoreszenzfarbstoffmoleküle (F) beeinträchtigen kann,
b. ein optisches Modulationssystem (20) zur Erzeugung einer Intensitätsverteilung (D) des Verhinderungslichts (I) mit mindestens einem lokalen Minimum (M),
c. eine Steuervorrichtung (30), die dazu ausgebildet ist, die Lichtmikroskopievorrichtung (1) so zu steuern, dass zusätzliches Verhinderungslicht (I) in einem Bereich (A) erzeugt wird, der sich mit dem lokalen Minimum (M) überschneidet,
d. einen Detektor (40) zum Erhalten eines Fluoreszenzsignals (S) aus der beleuchteten Probe (S),
e. eine Rechenvorrichtung (50), die dazu ausgebildet ist, ein erstes Fluoreszenzsignal, das von dem Detektor (40) aus dem Bereich (A), der sich mit dem lokalen Minimum (M) überschneidet, in Abwesenheit des zusätzlichen Verhinderungslichts (I) erhalten wird, durch ein zweites Fluoreszenzsignal zu korrigieren, das von dem Detektor (40) aus dem Bereich (A), der sich mit dem lokalen Minimum (M) überschneidet, in Anwesenheit des zusätzlichen Verhinderungslichts (I) erhalten wird,
**dadurch gekennzeichnet, dass**
das optische Modulationssystem (20) und die Steuervorrichtung (30) derart ausgebildet sind, dass an jedem Punkt der Intensitätsverteilung (D), an dem das Verhinderungslicht (I) eine Lichtintensität ($I_l$) aufweist, die größer ist als eine Sättigungsintensität des Verhinderungslichts (I), die Lichtintensität ($I_1$) des Verhinderungslichts (I) um 20 % oder weniger zwischen der Intensitätsverteilung (D) in Anwesenheit des zusätzlichen Verhinderungslichts (I) und der Intensitätsverteilung (D) in Abwesenheit des zusätzlichen Verhinderungslichts (I) abweicht, und dass die Intensitätsverteilung (D) des Verhinderungslichts (I) das lokale Minimum (M) sowohl in Anwesenheit des zusätzlichen Verhinderungslichts (I) als auch in Abwesenheit des zusätzlichen Verhinderungslichts (I) umfasst.

13. Lichtmikroskopievorrichtung (1) nach Anspruch 12, **dadurch gekennzeichnet, dass** die Lichtmikroskopievorrichtung (1) ein Einstellmittel (60) umfasst, das dazu ausgebildet ist, eine Lichtintensität (II) des zusätzlichen Verhinderungslichts (I) um einen variablen Betrag unabhängig von der Einstellung einer Leistung des ersten Verhinderungslichtstrahls (15) einzustellen.

14. Lichtmikroskopievorrichtung (1) nach Anspruch 12 oder 13, **dadurch gekennzeichnet, dass** die Lichtmikroskopievorrichtung (1) ein Objektiv (70) umfasst, das dazu ausgebildet ist, die Probe (S) mit dem Verhinderungslicht (I) zu beleuchten, und das optische Modulationssystem (20) einen Wellenfrontmodulator (21) umfasst, der dazu ausgebildet ist, eine Wellenfront des Verhinderungslichts (I) so zu modulieren, dass ein Phasenmuster und/oder ein Amplitudenmuster des Verhinderungslichts (I) in einer Rückapertur des Objektivs (70) erzeugt wird, wobei die Steuervorrichtung (30) dazu ausgebildet ist, das Phasenmuster und/oder das Amplitudenmuster zu modifizieren, um das zusätzliche Verhinderungslicht (I) in dem Bereich (A) bereitzustellen, der sich mit dem lokalen Minimum (M) überschneidet, insbesondere wobei das Einstellmittel (60) dazu ausgebildet ist, den Wellenfrontmodulator (21) einzustellen, um das Phasenmuster und/oder das Amplitudenmuster um einen variablen Betrag zu modifizieren, um die Lichtintensität des zusätzlichen Verhinderungslichts (I) um den variablen Betrag einzustellen.

15. Lichtmikroskopievorrichtung (1) nach einem der Ansprüche 12 bis 14, **dadurch gekennzeichnet, dass**

a. die Lichtmikroskopievorrichtung (1) einen Strahlteiler (80) umfasst, der dazu ausgebildet ist, Verhinderungslicht (I) von dem ersten Verhinderungslichtstrahl (15) abzuspalten, um einen zweiten Verhinderungslichtstrahl (16) zu erzeugen, bevor die Intensitätsverteilung (D) durch das optische Modulationssystem (20) erzeugt wird, wobei die Steuervorrichtung (30) dazu ausgebildet ist, die Lichtmikroskopievorrichtung (1) so zu steuern, dass der zweite Verhinderungslichtstrahl (16) die Probe (S) beleuchtet, um das zusätzliche Verhinderungslicht (I) in dem Bereich (A) bereitzustellen, der sich mit dem lokalen Minimum (M) überschneidet, wobei insbesondere das Einstellmittel (60) dazu ausgebildet ist, die Lichtmenge einzustellen, die von dem ersten Verhinderungslichtstrahl (15) durch den Strahlteiler (80) abgespalten wird, um die Intensität des zweiten Verhinderungslichtstrahls (16) zu steuern, um die Lichtintensität ($I_1$) des zusätzlichen Verhinderungslichts (I) um den variablen Betrag einzustellen, oder
b. die Lichtmikroskopievorrichtung (1) eine erste Verhinderungslichtquelle (11), die zum Erzeugen des ersten Verhinderungslichtstrahls (15) ausgebildet ist, und eine zweite Verhinderungslichtquelle (17), die zum Erzeugen eines zweiten Verhinderungslichtstrahls (16) zum Erzeugen des zusätzlichen Verhinderungslichts (I) ausgebildet ist, umfasst, wobei die Steuervorrichtung (30) dazu ausgebildet ist, die Lichtmikroskopievorrichtung (1) so einzustellen, dass der zweite Verhinderungslichtstrahl (16) die Probe (S) beleuchtet, um das zusätzliche Verhinderungslicht (I) in dem mit dem lokalen Minimum (M) überlappenden Bereich (A) bereitzustellen, wobei insbesondere die Lichtmikroskopievorrichtung (1) einen Intensitätsmodulator (18) umfasst, der dazu ausgebildet ist, eine Lichtintensität des zweiten Verhinderungslichtstrahls (17) zu steuern, wobei das Einstellmittel (60) dazu ausgebildet ist, den Intensitätsmodulator (18) zu steuern, um die Lichtintensität des zweiten Verhinderungslichtstrahls (17) um den variablen Betrag zu steuern.

## Revendications

1. Procédé de microscopie optique comprenant

a. illuminer un échantillon (S) comprenant des molécules de colorant fluorescent (F) par un faisceau lumineux d'excitation (14) comprenant une lumière d'excitation capable d'exciter les molécules de colorant fluorescent (F),
b. illuminer l'échantillon (S) par un premier faisceau lumineux d'inhibition (15) comprenant de la lumière d'inhibition (I) capable d'inhiber la fluorescence des molécules de colorant fluorescent (F), en particulier en induisant un appauvrissement de l'émission stimulée des molécules de colorant fluorescent (F)
c. générer une distribution d'intensité (D) de la lumière d'inhibition (I) avec au moins un minimum local (M),
d. fournir une lumière d'inhibition supplémentaire (I) dans une zone (A) chevauchant le minimum local (M),
e. obtenir un premier signal de fluorescence de la zone (A) chevauchant le minimum local (M) en l'absence de la lumière d'inhibition supplémentaire (I), et obtenir un second signal de fluorescence de la zone (A) chevauchant le minimum local (M) en présence de la lumière d'inhibition supplémentaire (I), et
f. corriger le premier signal de fluorescence par le second signal de fluorescence, **caractérisé en ce que**
en chaque point de la distribution d'intensité (D) où la lumière d'inhibition (I) a une intensité lumineuse ($I_l$) supérieure à une intensité de saturation, $I_{sat}$, de la lumière d'inhibition (I), l'intensité lumineuse ($I_l$) de la lumière d'inhibition (I) diffère de 20 % ou moins, entre la distribution d'intensité (D) en présence de la lumière d'inhibition supplémentaire (I) et la distribution d'intensité (D) en l'absence de la lumière d'inhibition supplémentaire (I), dans lequel la distribution d'intensité (D) de la lumière d'inhibition (I) comprenant le minimum local (M) à la fois en présence de la lumière d'inhibition supplémentaire (I) et en l'absence de la lumière d'inhibition supplémentaire (I).

2. Procédé selon la revendication 1, dans lequel le procédé comprend le réglage d'une intensité lumineuse ($I_I$) de la lumière d'inhibition supplémentaire (I) par une quantité variable indépendamment du réglage d'une puissance du premier faisceau de lumière d'inhibition (15), dans lequel en particulier une distribution d'amplitude, une polarisation ou une distribution de phase de la lumière d'inhibition (I) est modifiée par une quantité variable pour ajuster l'intensité lumineuse ($I_I$) de la lumière d'inhibition supplémentaire (I) par la quantité variable, plus particulièrement, ledit réglage de l'intensité lumineuse ($I_I$) de la lumière d'inhibition supplémentaire (I) par la quantité variable comprend la sélection d'une valeur d'intensité lumineuse parmi au moins deux valeurs d'intensité lumineuse discrètes différentes supérieures à zéro ou parmi une plage continue de valeurs d'intensité lumineuse et le réglage de l'intensité lumineuse de la lumière d'inhibition (I) à la valeur sélectionnée, en particulier de manière progressive ou par paliers.

3. Procédé selon la revendication 1 ou 2, dans lequel l'intensité lumineuse ($I_I$) de la lumière d'inhibition supplémentaire (I) au niveau du minimum local (M) est inférieure ou égale à 20 %, en particulier inférieure ou égale à 10, plus particulièrement inférieure ou égale à 5, d'une intensité lumineuse maximale ($I_I$) de la lumière d'inhibition (I), l'intensité lumineuse maximale se rapportant à la lumière d'inhibition (I) en l'absence de la lumière d'inhibition supplémentaire (I).

4. Procédé selon l'une des revendications précédentes, dans lequel le procédé comprend en outre la modulation d'un front d'onde de la lumière d'inhibition (I), de sorte qu'une distribution de phase et/ou une distribution d'amplitude de la lumière d'inhibition (I) est générée dans une ouverture arrière d'un objectif (70) à travers lequel l'échantillon (S) est illuminé par la lumière d'inhibition (I), en particulier par un modulateur de front d'onde (21) comprenant une zone active (21a, 21b) disposée dans un plan de pupille ou coupant un plan de pupille de l'objectif (70), plus particulièrement dans le cas où le procédé consiste en outre à modifier la distribution de phase ou la distribution d'amplitude d'une valeur variable en ajustant le modulateur de front d'onde (21) pour ajuster l'intensité lumineuse ($I_I$) de la lumière d'inhibition supplémentaire (I) d'une valeur variable.

5. Procédé selon la revendication 4, dans lequel le procédé comprend la modulation du front d'onde de la lumière d'inhibition (I) par un array (210) de micromiroirs inclinables (211), de sorte qu'une distribution d'amplitude de la lumière d'inhibition (I) est générée dans l'ouverture arrière de l'objectif (70) et la modification du schéma d'amplitude pour fournir la lumière d'inhibition supplémentaire (I) dans la zone (A) chevauchant le minimum local (M) en inclinant un sous-ensemble de micromiroirs (211), dans lequel, en particulier, le schéma d'amplitude est modifié par une quantité variable en inclinant un sous-ensemble de micromiroirs (211) pour ajuster l'intensité lumineuse ($I_I$) de la lumière d'inhibition supplémentaire (I) par la quantité variable.

6. Procédé selon la revendication 4, dans lequel le front d'onde de la lumière d'inhibition (I) est modulé de telle sorte qu'un schéma de phase en forme de vortex de la lumière d'inhibition (I) est obtenu à l'ouverture arrière de l'objectif (70), dans lequel le schéma de phase en forme de vortex comprend une phase augmentant de zéro à une valeur maximale, en particulier $2\pi$, dans une direction circonférentielle par rapport à un axe optique du premier faisceau de lumière d'inhibition (15), dans lequel le procédé consiste en outre à polariser circulairement le premier faisceau de lumière d'inhibition (15) après avoir obtenu le schéma de phase en forme de vortex, et dans lequel le procédé consiste en outre à modifier le schéma de phase pour fournir la lumière d'inhibition supplémentaire (I) dans la zone (A) chevauchant le minimum local, dans lequel en particulier le schéma de phase est modifié d'une quantité variable pour ajuster l'intensité lumineuse ($I_I$) de la lumière d'inhibition supplémentaire (I), dans lequel en particulier le schéma de phase est modifié de la manière suivante

   a. superposer un motif de phase en forme d'anneau ou de cercle ayant une phase constante avec le schéma de phase en forme de vortex pour générer la lumière d'inhibition supplémentaire (I) dans la zone (A) chevauchant le minimum local (M), plus particulièrement lorsque le procédé comprend en outre le contrôle d'une surface du motif en forme d'anneau ou de cercle, plus particulièrement encore pour ajuster l'intensité lumineuse ($I_I$) de la lumière d'inhibition supplémentaire (I) de la quantité variable, ou
   b. modifier la valeur maximale du diagramme de phase, en particulier pour ajuster l'intensité lumineuse ($I_I$) de la lumière d'inhibition supplémentaire (I) de la valeur variable.

7. Procédé selon la revendication 4, dans lequel le front d'onde de la lumière d'inhibition (I) est modulé de telle sorte qu'un motif de phase comprenant une première zone ($A_1$) comprenant une première phase constante et une deuxième zone ($A_2$) comprenant une deuxième phase constante, qui diffère de la première phase, en particulier par une différence de $\pi$, est généré, dans lequel la première zone ($A_1$) et la deuxième zone ($A_2$) s'étendent chacune perpendiculairement à un axe optique du premier faisceau de lumière d'inhibition (15), et dans lequel le procédé comprend en outre le réglage de la première phase et/ou de la deuxième phase ou le réglage de la taille de la première zone ($A_1$) et/ou de la deuxième zone ($A_2$) pour fournir la lumière d'inhibition supplémentaire (I) dans la zone (A) chevauchant le minimum local (M), en particulier pour régler l'intensité lumineuse de la lumière d'inhibition supplémentaire (I) par la quantité variable, dans lequel en particulier

   a. la première zone (A1) et la deuxième zone ($A_2$) sont séparées le long d'une ligne qui s'étend perpendiculairement à l'axe optique, ou
   b. la première zone ($A_1$) est circulaire, et la deuxième zone ($A_2$) a la forme d'un anneau circulaire autour de la première zone ($A_1$).

8. Procédé selon l'une des revendications 4 à 7, dans lequel le procédé comprend en outre la modification d'un schéma de phase de la lumière d'inhibition (I) par un premier élément de modification de la polarisation (90) et la rotation du premier élément de modification de la polarisation (90) autour d'un axe optique du premier faisceau de lumière d'inhibition (15) d'un angle variable inférieur à 45° pour fournir la lumière d'inhibition supplémentaire (I) dans la zone (A) chevauchant le minimum local (M), en particulier pour ajuster l'intensité lumineuse de la lumière d'inhibition supplémentaire (I) de la quantité variable.

9. Procédé selon l'une des revendications 4 à 8, dans lequel le procédé comprend en outre la génération d'un schéma de phase du premier faisceau de lumière d'inhibition (15) par une première zone active (21a) d'un modulateur de front d'onde (21), puis la rotation de la direction de polarisation de la lumière d'inhibition (I) d'un angle au moyen d'un deuxième élément de modification de la polarisation (23), moduler ensuite davantage le premier faisceau de lumière d'inhibition (15) par une deuxième zone active (21b) d'un modulateur de front d'onde sensible à la polarisation (21), l'angle étant ajusté pour fournir une lumière d'inhibition supplémentaire (I) dans la zone (A) chevauchant le minimum local (M), en particulier, le procédé consiste à ajuster l'angle d'une valeur variable pour ajuster l'intensité lumineuse ($I_l$) de la lumière d'inhibition supplémentaire (I) d'une valeur variable, en particulier, le procédé consiste en outre à générer le schéma de phase dans la lumière d'inhibition (1) par la première zone active (21a) dans une première direction de polarisation et à générer un autre schéma de phase dans la lumière d'inhibition (I) par la deuxième zone active (21b) dans une deuxième direction de polarisation perpendiculaire à la première direction de polarisation.

10. Procédé selon l'une des revendications précédentes, dans lequel le procédé comprend en outre l'illumination de l'échantillon (S) dans la zone (A) chevauchant le minimum local (M) par un second faisceau lumineux d'inhibition (16) capable d'inhiber la fluorescence des molécules de colorant fluorescent (F) pour fournir la lumière d'inhibition supplémentaire (I) dans la zone (A) chevauchant le minimum local (M), en particulier, le procédé comprend en outre le contrôle de l'intensité du second faisceau de lumière d'inhibition (16) pour ajuster l'intensité lumineuse ($I_l$) de la lumière d'inhibition supplémentaire (I) de la quantité variable, en particulier, le procédé comprend en outre

   a. générer le second faisceau lumineux d'inhibition (16) en séparant la lumière d'inhibition (I) du premier faisceau lumineux d'inhibition (15) avant de générer la distribution d'intensité (D) comprenant au moins un minimum local (M), ou
   b. générer le premier faisceau lumineux d'inhibition (15) par une première source de lumière d'inhibition (11) et générer le second faisceau lumineux d'inhibition (16) par une seconde source de lumière d'inhibition (17).

11. Procédé selon l'une des revendications précédentes, dans lequel le procédé comprend la génération d'une série de premières impulsions ($P_1$) et d'une série de secondes impulsions ($P_2$) de la lumière d'inhibition (I), dans lequel les premières impulsions ($P_1$) sont entrelacées avec les secondes impulsions ($P_2$), et dans lequel la lumière d'inhibition supplémentaire (I) est fournie pendant les secondes impulsions ($P_2$).

12. Dispositif de microscopie optique (1) pour l'exécution du procédé selon l'une des revendications 1-11, dans lequel le dispositif de microscopie optique (1) comprend

   a. au moins une source de lumière (10, 11) pour générer un faisceau de lumière d'excitation (14) et un premier faisceau de lumière d'inhibition (15) pour illuminer un échantillon (S) comprenant des molécules de colorant fluorescent (F), dans lequel le faisceau de lumière d'excitation (14) comprend une lumière d'excitation capable d'exciter les molécules de colorant fluorescent (F) et le premier faisceau de lumière d'inhibition (15) comprend une lumière d'inhibition (I) capable d'inhiber la fluorescence des molécules de colorant fluorescent (F),
   b. un système de modulation optique (20) pour générer une distribution d'intensité (D) de la lumière d'inhibition (I) avec au moins un minimum local (M),

c. un dispositif de commande (30) configuré pour commander le dispositif de microscopie optique (1), de sorte qu'une lumière d'inhibition supplémentaire (I) soit générée dans une zone (A) chevauchant le minimum local (M),

d. un détecteur (40) pour obtenir un signal de fluorescence (S) à partir de l'échantillon illuminé (S),

e. un dispositif de calcul (50) configuré pour corriger un premier signal de fluorescence obtenu par le détecteur (40) de la zone (A) chevauchant le minimum local (M) en l'absence de la lumière d'inhibition supplémentaire (I) par un second signal de fluorescence obtenu par le détecteur (40) de la zone (A) chevauchant le minimum local (M) en présence de la lumière d'inhibition supplémentaire (I),

**caractérisé en ce que**

le système de modulation optique (20) et le dispositif de commande (30) sont configurés de telle sorte qu'en chaque point de la distribution d'intensité (D) où la lumière d'inhibition (I) a une intensité lumineuse ($I_I$) supérieure à une intensité de saturation de la lumière d'inhibition (I), l'intensité lumineuse ($I_I$) de la lumière d'inhibition (I) diffère de 20 % ou moins, entre la distribution d'intensité (D) en présence de la lumière d'inhibition supplémentaire (I) et la distribution d'intensité (D) en l'absence de la lumière d'inhibition supplémentaire (I) et de telle sorte que la distribution d'intensité (D) de la lumière d'inhibition (I) comprenne le minimum local (M) à la fois en présence de la lumière d'inhibition supplémentaire (I) et en l'absence de la lumière d'inhibition supplémentaire (I).

13. Dispositif de microscopie optique (1) selon la revendication 12, **caractérisé en ce que** le dispositif de microscopie optique (1) comprend un moyen de réglage (60) configuré pour régler une intensité lumineuse ($I_I$) de la lumière d'inhibition supplémentaire (I) d'une quantité variable indépendamment du réglage d'une puissance du premier faisceau de lumière d'inhibition (15).

14. Dispositif de microscopie optique (1) selon la revendication 12 ou 13, **caractérisé en ce que** le dispositif de microscopie optique (1) comprend un objectif (70) configuré pour illuminer l'échantillon (S) avec la lumière d'inhibition (I), et le système de modulation optique (20) comprend un modulateur de front d'onde (21) configuré pour moduler un front d'onde de la lumière d'inhibition (I), de sorte qu'un schéma de phase et/ou un schéma d'amplitude de la lumière d'inhibition (I) est généré dans une ouverture arrière de l'objectif (70), dans lequel le dispositif de commande (30) est configuré pour modifier le schéma de phase et/ou le schéma d'amplitude afin de fournir la lumière d'inhibition supplémentaire (I) dans la zone (A) chevauchant le minimum local (M), en particulier dans lequel le moyen de réglage (60) est configuré pour régler le modulateur de front d'onde (21) afin de modifier le schéma de phase et/ou le schéma d'amplitude d'une quantité variable pour régler l'intensité lumineuse de la lumière d'inhibition supplémentaire (I) de la quantité variable.

15. Dispositif de microscopie optique (1) selon l'une des revendications 12 à 14, **caractérisé en ce que**

a. le dispositif de microscopie optique (1) comprend un séparateur de faisceau (80) configuré pour séparer la lumière d'inhibition (I) du premier faisceau de lumière d'inhibition (15) afin de générer un second faisceau de lumière d'inhibition (16) avant que la distribution d'intensité (D) ne soit générée par le système de modulation optique (20), dans lequel le dispositif de commande (30) est configuré pour commander le dispositif de microscopie optique (1), de sorte que le second faisceau de lumière d'inhibition (16) illumine l'échantillon (S) pour fournir la lumière d'inhibition supplémentaire (I) dans la zone (A) chevauchant le minimum local (M), dans lequel en particulier le moyen de réglage (60) est configuré pour régler la quantité de lumière séparée du premier faisceau de lumière d'inhibition (15) par le séparateur de faisceau (80) pour contrôler l'intensité du second faisceau de lumière d'inhibition (16) afin de régler l'intensité lumineuse ($I_I$) de la lumière d'inhibition supplémentaire (I) de la quantité variable, ou

b. le dispositif de microscopie optique (1) comprend une première source de lumière d'inhibition (11) configurée pour générer le premier faisceau de lumière d'inhibition (15) et une seconde source de lumière d'inhibition (17) configurée pour générer un second faisceau de lumière d'inhibition (16) pour générer la lumière d'inhibition supplémentaire (I), dans lequel le dispositif de commande (30) est configuré pour ajuster le dispositif de microscopie optique (1), de sorte que le second faisceau lumineux d'inhibition (16) illumine l'échantillon (S) pour fournir la lumière d'inhibition supplémentaire (I) dans la zone (A) chevauchant le minimum local (M), dans lequel en particulier le dispositif de microscopie optique (1) comprenant un modulateur d'intensité (18) configuré pour contrôler l'intensité lumineuse du second faisceau lumineux d'inhibition (17), le moyen de réglage (60) étant configuré pour contrôler le modulateur d'intensité (18) afin de contrôler l'intensité lumineuse du second faisceau lumineux d'inhibition (17) de la quantité variable.

Fig. 1

Fig. 2

Fig. 3A

Fig. 3B

Fig. 3C

2π/0

1,5π — * — 0,5π

π

Fig. 4A

2π/0          c

1,5π — * — 0,5π

π

Fig. 4B

1,9π/0

1,425π — * — 0,475π

0,95π

Fig. 4C

π          0

$A_1$          $A_2$

Fig. 5A

π          0

$A_1$          $A_2$

Fig. 5B

0,9π          0

$A_1$          $A_2$

Fig. 5C

π          0

$A_1$

$A_2$

Fig. 6A

π          0

$A_1$

$A_2$

Fig. 6B

0,9π          0

$A_1$

$A_2$

Fig. 6C

Fig. 7A

Fig. 7B

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020198487 A1
- EP 3686643 A1
- DE 102014113716 A1
- DE 102014113716

**Non-patent literature cited in the description**

- **HANNE J** ; **FALK, HJ** ; **GÖRLITZ F** ; **HOYER P** ; **ENGELHARDT J** ; **SAHL SJ** ; **HELL SW**. STED Nanoscopy with Fluorescent Quantum Dots. *Nat. Comm.*, 06 May 2015, 7127
- **VICIDOMINI G** ; **MONERON G** ; **EGGELING C** ; **RITTWEGER E** ; **HELL SW**. STED with Wavelengths Closer to the Emission Maximum. *Opt. Express*, 2012, vol. 20 (5), 5225
- **GAO P** ; **PRUNSCHE B** ; **ZHOU L** ; **NIENHAUS K** ; **NIENHAUS GU**. Background Subtraction in Stimulated Emission Double Depletion Nanoscopy. *Opt. Lett.*, 2017, vol. 42 (4), 831
- **GAO P** ; **PRUNSCHE B** ; **ZHOU L** ; **NIENHAUS K** ; **NIENHAUS GU**. Background Suppression in Fluorescence Nanoscopy with Stimulated Emission Double Depletion. *Nat. Photonics*, 2017, vol. 11 (3), 167-169
- **VICIDOMINI G** ; **MONERON G** ; **HAN KY** ; **WESTPHAL V** ; **TA H** ; **REUSS M** ; **ENGELHARDT J** ; **EGGELING C** ; **HELL SW**. Sharper Low-Power STED Nanoscopy by Time Gating. *Nat. Methods*, 2011, vol. 8 (7), 571-573
- **P. GAO** ; **G.U. NIENHAUS**. Precise background subtraction in stimulated emission double depletion nanoscopy. *Optics Letters*, 15 February 2017, vol. 42 (4), 831-834
- **Y. MA** ; **T. HA**. Fight against background noise in stimulated emission depletion nanoscopy. *Physical Biology*, 2019, vol. 16, 051002
- **A. MÖHL** ; **I. KHAW** ; **B. CROOP** ; **J. TANG** ; **U. FUCHS** ; **K.Y. HAN**. Improving quantitative fluorescence imaging with flat field illumination. *Proc. of SPIE*, 2019, vol. 10881, 1088103-1, 1088103-9
- *Physical Review E*, 2001, vol. 64, 066613-1, 066613-9